(19)

Europäisches
Patentamt

European
Patent Office

Office européen
des brevets

(11)     **EP 2 320 587 A1**

(12)     **EUROPEAN PATENT APPLICATION**
published in accordance with Art. 153(4) EPC

(43) Date of publication:
**11.05.2011 Bulletin 2011/19**

(21) Application number: **09802900.2**

(22) Date of filing: **24.07.2009**

(51) Int Cl.:
*H04J 99/00* (2009.01)     *H04B 7/04* (2006.01)
*H04J 11/00* (2006.01)     *H04W 16/28* (2009.01)

(86) International application number:
**PCT/JP2009/063294**

(87) International publication number:
**WO 2010/013657 (04.02.2010 Gazette 2010/05)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **28.07.2008 JP 2008193407**

(71) Applicant: **Sharp Kabushiki Kaisha
Osaka-shi, Osaka 545-8522 (JP)**

(72) Inventors:
• **YAMADA, Ryota**
  **Osaka 545-8522 (JP)**
• **YOSHIMOTO, Takashi**
  **Osaka 545-8522 (JP)**
• **SHIMEZAWA, Kazuyuki**
  **Osaka 545-8522 (JP)**

(74) Representative: **Müller - Hoffmann & Partner
Patentanwälte
Innere Wiener Strasse 17
81667 München (DE)**

(54)     **COMMUNICATION SYSTEM, RECEIVING DEVICE AND COMMUNICATION METHOD**

(57)     A reception device, which communicates with a transmission device having multiple transmission antennas, includes: at least one reception antenna which receives multiple transmission signals that are transmitted from the multiple transmission antennas by the transmission device; a Fourier transform unit which transforms the signals received by the reception antenna from a time domain into a frequency domain; a propagation channel estimating unit which calculates propagation channel estimation values by estimating propagation channels between the multiple transmission antennas and the reception antenna; and a signal detecting unit which detects the multiple transmission signals by dividing multipaths from the signals that are transformed into the frequency domain by the Fourier transform unit.

FIG. 2

EP 2 320 587 A1

**Description**

TECHNICAL FIELD

The present invention relates to a communication system, a reception device, and a communication method. This application claims priority to and the benefits of Japanese Patent Application No. 2008-193407 filed on July 28, 2008, the disclosure of which is incorporated herein by reference.

BACKGROUND ART

Recently, multiple input multiple output (MIMO) systems have been used to implement high speed transmission in the field of wireless communication. The MIMO systems may increase a transmission rate without extending a frequency bandwidth by transmitting multiple independent transmission signals from a radio transmission device to a radio reception device at the same frequency and timing.
In the MIMO systems, different transmission signals are multiplexed and received by the radio reception device. Thus, a technique of separating spatially multiplexed transmission signals is necessary for the radio reception device.

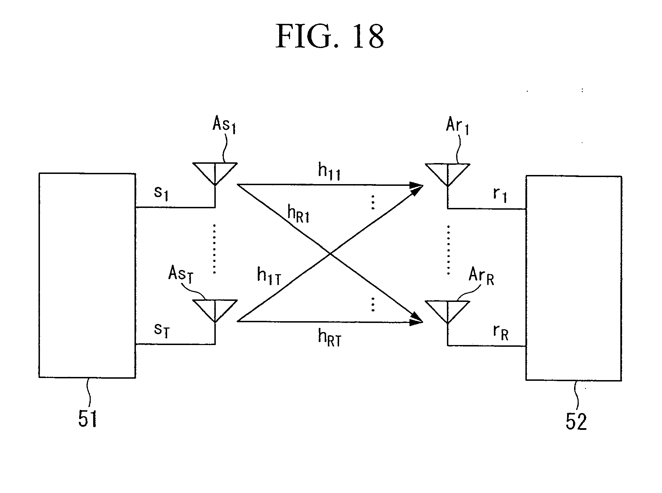

FIG. 18 is a schematic diagram showing a MIMO system known from the related art. The MIMO system includes a radio transmission device 51 (also referred to as a transmission device) and a radio reception device 52 (also referred to as a reception device). The radio transmission device 51 includes T (T is 2 or an integer greater than 2) transmission antennas $A_{S1}$ to $A_{ST}$, and transmits different transmission signals $s_1$ to $s_T$ from the transmission antennas $A_{s1}$ to $A_{sT}$ to the radio reception device 52.
The transmission signals $s_1$ to $s_T$ transmitted from the transmission antennas $A_{s1}$ to $A_{sT}$ of the radio transmission device 51 are received by R (R is 1 or an integer greater than 1) reception antennas $A_{r1}$ to $A_{rR}$ provided in the radio reception device 52. At this time, a transmission/reception signal of the MIMO system may be expressed as shown in Equations (1) to (5).
$$r = Hs + n \quad \cdot \cdot \cdot \quad (1)$$

$$r = \begin{bmatrix} r_1 & \cdots & r_R \end{bmatrix}^T \quad \cdot \cdot \cdot \quad (2)$$

$$H = \begin{pmatrix} h_{11} & \cdots & h_{1T} \\ \vdots & \ddots & \vdots \\ h_{R1} & \cdots & h_{RT} \end{pmatrix} \quad \cdot \cdot \cdot \quad (3)$$

$$s = \begin{bmatrix} s_1 & \cdots & s_T \end{bmatrix}^T \quad \cdot \cdot \cdot \quad (4)$$

$$n = \begin{bmatrix} n_1 & \cdots & n_R \end{bmatrix}^T \quad \cdots \quad (5)$$

In this regard, a vector r of the left side of Equation (1) and the left side of Equation (2) is a (1 row×R columns) reception signal vector having reception signals received by the respective reception antennas $A_{r1}$ to $A_{rR}$ of the radio reception device 52, as elements.

A vector H of the left side of Equation (3) is an (R rows×T columns) propagation channel matrix having propagation channel responses $h_{11}$, ⋯, $h_{R1}$, ⋯, $h_{1T}$, ⋯, $h_{RT}$ among the transmission antennas $A_{s1}$ to $A_{sT}$ of the radio transmission device 51 and the reception antennas $A_{r1}$ to $A_{rR}$ of the radio reception device 52, as elements.

Here, $h_{11}$ is a propagation channel response between the transmission antenna $A_{s1}$ and the reception antenna $A_{r1}$. $h_{R1}$ is a propagation channel response between the transmission antenna $A_{s1}$ and the reception antenna $A_{rR}$. Also, $h_{1T}$ is a propagation channel response between the transmission antenna $A_{sT}$ and the reception antenna $A_{r1}$. $h_{RT}$ is a propagation channel response between the transmission antenna $A_{sT}$ and the reception antenna $A_{rR}$. The right superscript T of a matrix denotes a transposed matrix of the matrix.

A vector s of the left side of Equation (4) is a (1 row×T columns) transmission signal vector having transmission signals transmitted by the respective transmission antennas $A_{s1}$ to $A_{sT}$ of the radio transmission device 51 as elements. A vector n of the left side of Equation (5) is a (1 row×R columns) noise vector having noise added to the respective reception antennas $A_{r1}$ to $A_{rR}$ of the radio reception device 52 as elements.

Linear processing is known as a technique of separating signals spatially multiplexed as shown in Equation (1). For example, the linear processing is zero forcing detection (ZFD) or minimum mean square error detection (MMSED). The linear processing is widely used since a calculation amount is small. The above-described MIMO system is disclosed in Non-Patent Document 1.

In the MIMO systems of the related art, good characteristics are obtained when the number of reception antennas, R, of the radio reception device 52 is large. In particular, to obtain good transmission characteristics using the above-described linear processing like ZFD or MMSED, it is preferable that the relationship of T≤R be established between the number of transmission antennas, T, of the radio transmission device 51 and the number of reception antennas, R, of the radio reception device 52.

If T>R, transmission characteristics are significantly degraded. To avoid this problem, it is desirable to increase the number of reception antennas of the radio reception device 52. However, if the radio reception device 52 is a small-size radio reception device such as a mobile terminal, it is difficult to increase the number of reception antennas since the number of reception antennas capable of being mounted is limited.

Non-Patent Document 1: Arogyaswami J. Paulraj, Dhananjay A. Gore, Rohit U. Nabar, Helmut Bolcskei, "An overview of MIMO communications-A key to Gigabit wireless," Proceedings of the IEEE, Vol. 92, No. 2, pp. 198-218, February 2004.

DISCLOSURE OF INVENTION

Problem to be Solved by the Invention

The present invention has been made in view of the above-described circumstances, and an object of the invention is to provide a communication system, a reception device, and a communication method that can obtain good transmission characteristics between a transmission device and a reception device without increasing the number of reception antennas of the reception device.

Means for Solving the Problem

(1) The present invention has been made to solve the above-described problems. According to an aspect of the present invention, there is provided a communication system including a transmission device and a reception device, wherein the transmission device includes: multiple transmission antennas; and a transmitting unit which transmits transmission signals from the multiple transmission antennas to the reception device, and the reception device includes: at least one reception antenna which receives multiple transmission signals from the multiple transmission antennas; a Fourier transform unit which transforms the signals received by the reception antenna from a time domain into a frequency domain; a propagation channel estimating unit which calculates propagation channel estimation values by estimating propagation channels between the multiple transmission antennas and the reception antenna; and a signal detecting unit which detects the multiple transmission signals by dividing multipaths from the signals that are transformed into the frequency domain by the Fourier transform unit.

(2) According to another aspect of the present invention, there is provided a reception device, which communicates with a transmission device having multiple transmission antennas, including: at least one reception antenna which receives multiple transmission signals that are transmitted from the multiple transmission antennas by the transmission device; a Fourier transform unit which transforms the signals received by the reception antenna from a time domain into a frequency domain; a propagation channel estimating unit which calculates propagation channel estimation values by estimating propagation channels between the multiple transmission antennas and the reception antenna; and a signal detecting unit which detects the multiple transmission signals by dividing multipaths from the signals that are transformed into the frequency domain by the Fourier transform unit.

(3) In the reception device according to the aspect of the present invention, the signal detecting unit may generate multipath division signals divided based on the multipaths from the signals that are transformed into the frequency domain by the Fourier transform unit, and detect the multiple transmission signals using the multipath division signals.

(4) In the reception device according to the aspect of the present invention, the reception device may includes: a demodulation unit which generates coded bit LLRs, which are reliability information of bits, by demodulating the signals detected by the signal detecting unit; and a decoding unit which performs an error correction decoding process on the coded bit LLRs generated by the demodulation unit, wherein the signal detecting unit may generate the multipath division signals using the coded bit LLRs output by the decoding unit.

(5) In the reception device according to the aspect of the present invention, the signal detecting unit may include: a symbol replica generating unit which generates symbol replicas, which are replicas of modulation symbols from the coded bit LLRs; a multipath dividing unit which divides the propagation channel estimation values based on the multipaths; a division replica generating unit which generates division replicas to generate the multipath division signals from the symbol replicas and the propagation channel estimation values divided by the multipath dividing unit; a reception signal dividing unit which generates the multipath division signals by subtracting the division replicas from the signals that are transformed into the frequency domain by the Fourier transform unit; and a signal separating unit which detects the multiple transmission signals from the multipath division signals.

(6) In the reception device according to the aspect of the present invention, the signal separating unit may generate linear weights using the propagation channel estimation values, the propagation channel estimation values divided by the multipath dividing unit, and the symbol replicas, and detect the multiple transmission signals using the linear weights.

(7) In the reception device according to the aspect of the present invention, the reception device may include: a demodulation unit which generates coded bit LLRs, which are reliability information of bits, by demodulating the signals detected by the signal detecting unit; and a decoding unit which performs an error correction decoding process on the coded bit LLRs generated by the demodulation unit, wherein the signal detecting unit may include: a symbol replica generating unit which generates symbol replicas, which are replicas of modulation symbols, from the coded bit LLRs on which the decoding unit performs the error correction decoding process; a reception signal replica generating unit which generates reception signal replicas from the symbol replicas and the propagation channel estimation values; a replica removing unit which removes the reception signal replicas from the signals that are transformed into the frequency domain by the Fourier transform unit; a multipath dividing unit which divides the propagation channel estimation values based on the multipaths; and a signal reproducing unit which detects the multiple transmission signals using the signals from which the reception signal replicas are removed by the replica removing unit, the propagation channel estimation values, the propagation channel estimation values divided by the multipath dividing unit, and the symbol replicas.

(8) In the reception device according to the aspect of the present invention, the signal reproducing unit may detect the multiple transmission signals for each desired transmission signal.

(9) In the reception device according to the aspect of the present invention, communication with the transmission device may be performed using single carrier transmission.

(10) In the reception device according to the aspect of the present invention, communication with the transmission device may be performed using multicarrier transmission.

(11) According to still another aspect of the present invention, there is provided a communication method using a transmission device having multiple transmission antennas and a reception device having at least one reception antenna, including: transmitting, by the transmission device, transmission signals from the multiple transmission antennas to the reception device, and transforming, by the reception device, the transmission signals received by the reception antenna from a time domain into a frequency domain; calculating, by the reception device, propagation channel estimation values by estimating propagation channels between the multiple transmission antennas and the reception antenna; and detecting, by the reception device, the multiple transmission signals by dividing multipaths from the signals that are transformed into the frequency domain in the Fourier transforming.

Effect of the Invention

A communication system, a reception device, and a communication method of the present invention can obtain good transmission characteristics between a transmission device and a reception device without increasing the number of reception antennas of the reception device.

BRIEF DESCRIPTION OF THE DRAWINGS

FIG. 1 is a schematic block diagram showing a configuration of a radio transmission device according to a first embodiment of the present invention.
FIG. 2 is a schematic block diagram showing a configuration of a radio reception device according to the first embodiment of the present invention.
FIG. 3 is a schematic block diagram showing a configuration of a signal detecting unit (FIG. 2) of the radio reception device according to the first embodiment of the present invention.
FIG. 4 is a diagram showing an example of a multipath division process of a multipath dividing unit according to the first embodiment of the present invention.
FIG. 5 is a flowchart showing a reception process of the radio reception device according to the first embodiment of the present invention.
FIG. 6 is a flowchart showing processing of a reception signal dividing unit according to the first embodiment of the present invention.
FIG. 7 is a flowchart showing processing of a signal separating unit according to the first embodiment of the present invention.
FIG. 8 is a flowchart showing processing of a division replica generating unit according to the first embodiment of the present invention.
FIG. 9 is a schematic block diagram showing a configuration of a signal detecting unit of a radio reception device according to a second embodiment of the present invention.

FIG. 10 is a flowchart showing a reception process of the radio reception device according to the second embodiment of the present invention.

FIG. 11 is a flowchart showing processing of a replica removing unit according to the second embodiment of the present invention.

FIG. 12 is a flowchart showing processing of a signal reproducing unit according to the second embodiment of the present invention.

FIG. 13 is a flowchart showing a reception process of a radio reception device according to a third embodiment of the present invention.

FIG. 14 is a schematic block diagram showing a configuration of a radio transmission device according to a fourth embodiment of the present invention.

FIG. 15 is a schematic block diagram showing a configuration of a radio reception device according to the fourth embodiment of the present invention.

FIG. 16 is a schematic block diagram showing a configuration of a signal detecting unit (FIG. 15) of the radio reception device according to the fourth embodiment of the present invention.

FIG. 17 is a flowchart showing a reception process of the radio reception device according to the fourth embodiment of the present invention.

FIG. 18 is a schematic configuration diagram of a MIMO system known from the related art.

BEST MODE FOR CARRYING OUT THE INVENTION

Hereinafter, first to fourth embodiments of the present invention will be described using the drawings. First, the first embodiment of the present invention will be described.

(First Embodiment)

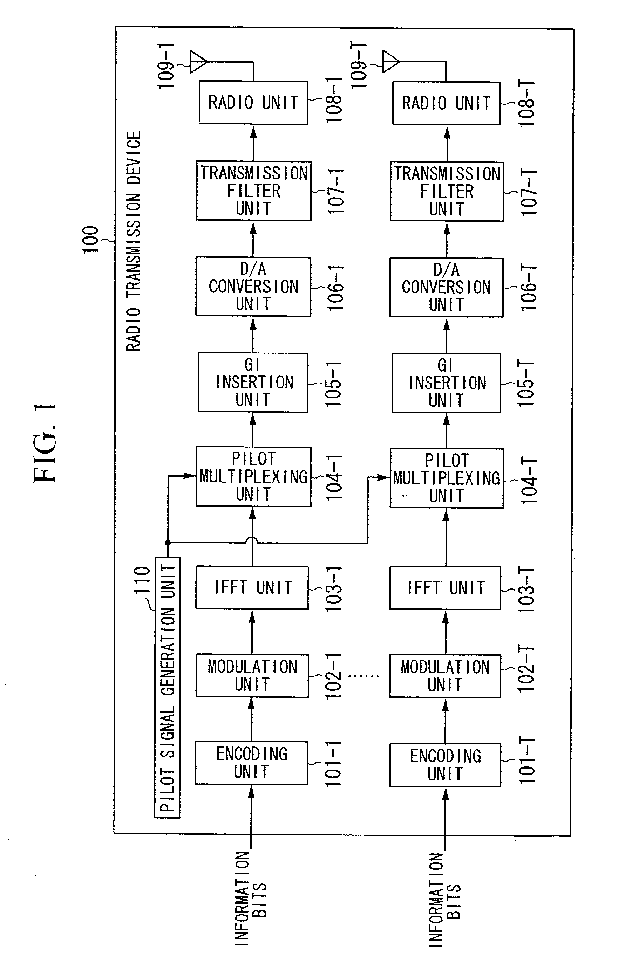

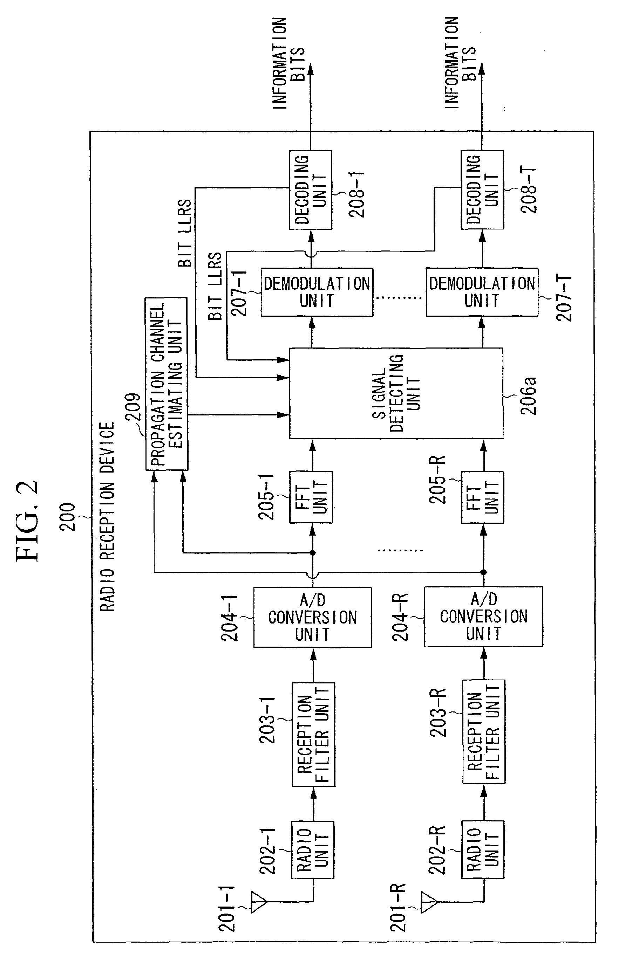

In the first embodiment, a radio communication system using multiple input multiple output-orthogonal frequency division multiplexing (MIMO-OFDM) will be described.
The radio communication system according to the first embodiment of the present invention includes a radio transmission device 100 (FIG. 1) and a radio reception device 200 (FIG. 2). The radio transmission device 100 is a base station device. The radio reception device 200 is a mobile station device such as a mobile phone.

FIG. 1 is a schematic block diagram showing a configuration of the radio transmission device 100 according to the first embodiment of the present invention. The radio transmission device 100 includes encoding units 101-1 to 101-T, modulation units 102-1 to 102-T, IFFT (inverse fast Fourier transform) units 103-1 to 103-T, pilot multiplexing units 104-1 to 104-T, GI (guard interval) insertion units 105-1 to 105-T, D/A (digital to analog) conversion units 106-1 to 106-T, transmission filter units 107-1 to 107-T, radio units 108-1 to 108-T, transmission antennas 109-1 to 109-T, and a pilot signal generating unit 110. In FIG. 1, T is 2 or an integer greater than 2.

The encoding unit 101-1 performs error correction coding of a convolution code, a turbo code, or the like on information bits output from an upper layer (not shown) of the radio transmission device 100, and outputs the coded bits to the modulation unit 102-1.
The modulation unit 102-1 maps the coded bits error-correction coded by the encoding unit 101-1 to a modulation symbol of quadrature phase shift keying (QPSK), 16 quadrature amplitude modulation (16QAM), or the like, and outputs the modulation symbol to the IFFT unit 103-1.
The IFFT unit 103-1 transforms the modulation symbol output from the modulation unit 102-1 from a frequency domain signal into a time domain signal, and outputs the time domain signal to the pilot multiplexing unit 104-1.

The pilot signal generating unit 110 generates a pilot signal and respectively outputs the pilot signal to the pilot multiplexing units 104-1 to 104-T.
The pilot multiplexing unit 104-1 multiplexes the pilot signal generated by the pilot signal generating unit 110 with the signal output by the IFFT unit 103-1, and outputs the multiplexed signal to the GI insertion unit 105-1.
The GI insertion unit 105-1 adds a guard interval (GI) to the signal output by the pilot multiplexing unit 104-1, and outputs the signal to the D/A conversion unit 106-1.
The D/A conversion unit 106-1 converts the signal output by the GI insertion unit 105-1 from a digital signal into an analog signal, and outputs the analog signal to the transmission filter unit 107-1.
The transmission filter unit 107-1 shapes a waveform of the signal D/A converted by the D/A conversion unit 106-1 and outputs the waveform-shaped signal to the radio unit 108-1.
The radio unit 108-1 converts the signal output by the transmission filter unit 107-1 into a radio frequency, and outputs the radio frequency signal to the transmission antenna 109-1.
The transmission antenna 109-1 transmits the signal, which is converted into the radio frequency by the radio unit 108-1, to the radio reception device 200 (FIG. 2).

The radio transmission device 100 generates multiple (T) transmission signals in parallel as described above. The radio transmission device 100 transmits the T generated signals to the radio reception device 200 at the same frequency and timing using the multiple transmission antennas 109-1 to 109-T. The transmission signals are received by the radio reception device 200 through multipath propagation channels.

Since the configurations of the encoding units 101-2 (not shown) to 101-T, the modulation units 102-2 (not shown) to 102-T, the IFFT units 103-2 (not shown) to 103-T, the pilot multiplexing units 104-2 (not shown) to 104-T, the GI insertion units 105-2 (not shown) to 105-T, the D/A conversion units 106-2 (not shown) to 106-T, the transmission filter units 107-2 (not shown) to 107-T, the radio units 108-2 (not shown) to 108-T, and the transmission antennas 109-2 (not shown) to 109-T are the same as those of the encoding unit 101-1, the modulation unit 102-1, the IFFT unit 103-1, the pilot multiplexing unit 104-1, the GI insertion unit 105-1, the D/A conversion unit 106-1, the transmission filter unit 107-1, the radio unit 108-1, and the transmission antenna 109-1, a description thereof is omitted.

FIG. 2 is a schematic block diagram showing a configuration of the radio reception device 200 according to the first embodiment of the present invention. The radio reception device 200 includes reception antenna units 201-1 to 201-R, radio units 202-1 to 202-R, reception filter units 203-1 to 203-R, A/D (analog to digital) conversion units 204-1 to 204-R, FFT (fast Fourier transform) units 205-1 to 205-R, a signal detecting unit 206a, demodulation units 207-1 to 207-T, decoding units 208-1 to 208-T, and a propagation channel estimating unit 209. In FIG. 2, R is 1 or an integer greater than 1. In FIG. 2, T is 2 or an integer greater than 2.

The reception antenna 201-1 receives a signal transmitted by the radio transmission device 100 (FIG. 1), and outputs the received signal to the radio unit 202-1.

The radio unit 202-1 converts the signal output by the reception antenna 201-1 from the radio frequency into a baseband signal, and outputs the baseband signal to the reception filter unit 203-1.

The reception filter unit 203-1 shapes a waveform of the signal output by the radio unit 202-1, and outputs the waveform-shaped signal to the A/D conversion unit 204-1.

The A/D conversion unit 204-1 converts the signal output by the reception filter unit 203-1 from an analog signal into a digital signal, and outputs the digital signal to the FFT unit 205-1 and the propagation channel estimating unit 209.

The FFT unit 205-1 converts the signal output by the A/D conversion unit 204-1 from a time domain signal into a frequency domain signal, and outputs the frequency domain signal as a reception signal to the signal detecting unit 206a.

The signal detecting unit 206a separates MIMO multiplexed signals from reception signals output by the FFT units 205-1 to 205-R using log likelihood ratios (LLRs) output by the decoding units 208-1 to 208-R and propagation channel estimation values output by the propagation channel estimating unit 209, and outputs the signals to the demodulation units 207-1 to 207-T.

The demodulation unit 207-1 calculates bit LLRs by demodulating the signals output by the signal detecting unit 206a, and outputs the bit LLRs to the decoding unit 208-1. Here, the demodulation process when QPSK is used as a modulation scheme will be described. It is assumed that a predetermined symbol after signal separation is X. Also, it is assumed that bits constituting a QPSK modulation symbol are $b_0$ and $b_1$.

At this time, $\lambda(b_0)$, which is a coded bit LLR obtained by demodulating the symbol X, can be expressed as shown in the following Equation (6).

$$\lambda(b_o) = \frac{2\operatorname{Re}(X)}{\sqrt{2}(1-\mu)} \cdots \quad (6)$$

$\lambda()$ denotes an LLR. Re() denotes a real part of a complex number. A bit LLR for $\lambda(b_1)$ is obtained by replacing Re(X) of Equation (6) with an imaginary part of X. $\mu$ is an equivalent amplitude after MIMO signal separation, and is calculated as a product of a weight and a propagation channel estimation value used in the MIMO signal separation.

The decoding unit 208-1 performs an error correction decoding process on the bit LLRs output by the demodulation unit 207-1 and outputs information bits. The decoding unit 208-1 outputs the bit LLRs to the signal detecting unit 206a.

The propagation channel estimating unit 209 estimates propagation channel estimation values using the pilot signals included in the signals output by the A/D conversion units 204-1 to 204-R, and outputs the propagation channel estimation values to the signal detecting unit 206a.

Since the configurations of the reception antenna units 201-2 (not shown) to 201-R, the radio units 202-2 (not shown) to 202-R, the reception filter units 203-2 (not shown) to 203-R, the A/D conversion units 204-2 (not shown) to 204-R, the FFT units 205-2 (not shown) to 205-R, the demodulation units 207-2 (not shown) to 207-T, and the decoding units 208-2 (not shown) to 208-T are the same as those of the reception antenna unit 201-1, the radio unit 202-1, the reception filter unit 203-1, the A/D conversion unit 204-1, the FFT unit 205-1, the demodulation unit 207-1, and the decoding unit 208-1, a description thereof is omitted.

Next, the processing of the signal detecting unit 206a when the MIMO signal separation is performed using a minimum mean square error (MMSE) weight, which is a linear weight, will be specifically described. A MIMO-OFDM reception signal R(k) in a $k^{th}$ subcarrier is expressed as shown in the following Equation (7).

$$\mathbf{R}(k) = \mathbf{H}(k)\mathbf{S}(k) + \mathbf{N}(k) \qquad \cdot \cdot \cdot \qquad (7)$$

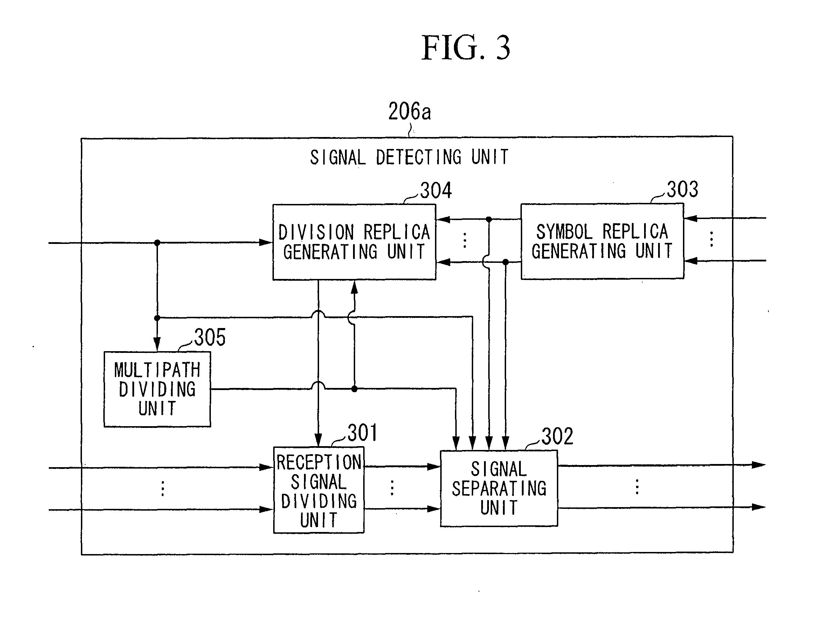

In Equation (7), R(k) denotes an R-dimensional reception signal vector having reception signals in the reception antennas 201-1 to 201-R as elements. More specifically, R(k) is an R-dimensional vector representing frequency domain signals, which are output from the FFT units 205-1 to 205-R of the radio reception device 200 and are input to a reception signal dividing unit 301 (FIG. 3 to be described later) of the signal detecting unit 206a.

H(k) denotes a propagation channel matrix of R rows and T columns having propagation channels between the transmission antennas 109-1 to 109-T (FIG. 1) and the reception antennas 201-1 to 201-R (FIG. 2) as elements.

S(k) denotes a T-dimensional transmission signal vector having signals transmitted by the transmission antennas 109-1 to 109-T as elements. More specifically, S(k) is a T-dimensional vector representing signals on a frequency axis, which are output to the IFFT units 103-1 to 103-T by the modulation units 102-1 to 102-T of the radio transmission device 100.

N(k) denotes an R-dimensional noise vector having noise in the reception antennas 201-1 to 201-R as elements.

In addition, k is an integer satisfying the condition of $1 \leq k \leq N_{sub}$. $N_{sub}$ denotes the number of subcarriers of an OFDM signal. $R_B(k)$, which is a reception signal after multipath division, is expressed as shown in the following Equation (8).

In an embodiment of the present invention, reception signals of multipaths (a collective term for a path of a preceding wave and a path of a delay wave different therefrom) are divided for the purpose of obtaining good transmission characteristics. Each of the reception signals after division is obtained by adding a reception signal replica generated by a divided multipath to a removal residual component, which is obtained by removing a reception signal replica from a reception signal of a corresponding reception antenna. Hereinafter, this point will be described using equations.

$$\mathbf{R}_B(k) = \tilde{\mathbf{R}}(k) + \hat{\mathbf{R}}_B(k) \qquad \cdot \cdot \cdot \qquad (8)$$

Here, it is assumed that the number of signals after multipath division is $N_B$. If the number of divisions in the $1^{st}$ to $R^{th}$ reception antennas 201-1 to 201-R, that is, the number of signals after division, is respectively $N_1$ to $N_R$, $N_B = N_1 + \cdots + N_R$.

$R_B(k)$ is an $N_B$-dimensional vector having reception replicas generated using propagation channel estimation values after the multipath division as elements.

$R^-(k)$ is an $N_B$-dimensional vector obtained by copying reception antenna components of signals from which reception signal replicas in the reception antennas 201-1 to 201-R are removed by the number of divisions.

The following Equation (9) is used to remove a reception signal replica from a reception signal.

$$\mathbf{R}_{res}(k) = \mathbf{R}(k) - \hat{\mathbf{h}}(k)\hat{\mathbf{S}}(k) \qquad \cdot \cdot \cdot \qquad (9)$$

In this regard, in Equation (9), $h^\wedge(k)$ is a propagation channel estimation value matrix of $N_R$ rows and T columns. $S^\wedge(k)$ is a T-dimensional vector having symbol replicas in the transmission antennas 109-1 to 109-T as elements.

For example, $R^-(k)$, which is an $N_B$-dimensional vector, is generated by $1^{st}$ to $N_1^{th}$ elements as $N_1$ copies of a $1^{st}$ element of $R_{res}(k)$, by $(N_1+1)^{th}$ to $(N_1+N_2)^{th}$ elements as $N_2$ copies of a $2^{nd}$ element of $R_{res}(k)$, $\cdots$, by $(N_1+ \cdots +N_R-1+1)^{th}$ to $N_B^{th}$ elements as $N_R$ copies of an $R^{th}$ element of $R_{res}(k)$. $R^\wedge_B(k)$ is an $N_B$-dimensional vector having reception replicas generated by divided multipaths as elements. That is, it is generated using reception replicas generated by multipaths divided by the number of divisions, $N_1$, in a reception signal replica in the reception antenna 201-1 as $1^{st}$ to

$N_1^{th}$ elements of $R^\wedge_B(k)$, $\cdots$ , using reception replicas generated by multipaths divided by the number of divisions, $N_R$, in a reception signal replica in the reception antenna 201-R as $(N_1+ \cdots +N_R-1+1)^{th}$ to $N_B^{th}$ elements of $R^\wedge_B(k)$.

An MMSE weight is W(k) in which $\| W^H(k)R_B(k)-S(k)\|^2$ is minimized. The right superscript H of a matrix denotes a complex conjugate transpose of the matrix. $\| x \|^2$ denotes a norm of x.

$W^H(k)$, which is the MMSE weight, is expressed by the following Equations (10) to (12).

$$\mathbf{W}^H(k) = \mathbf{H}_B^H(k)\left(\mathbf{H}_B(k)\mathbf{P}(k)\mathbf{H}_B^H(k) + \tilde{\mathbf{H}}(k)\mathbf{\Lambda}(k)\tilde{\mathbf{H}}^H(k) + \sigma_n^2\mathbf{I}_{N_B}\right)^{-1} \dots \quad (10)$$

$$\mathbf{P}(k) = \hat{\mathbf{S}}(k)\hat{\mathbf{S}}^H(k) \quad \dots \quad (11)$$

$$\mathbf{\Lambda}(k) = \mathbf{I}_{N_T} - \hat{\mathbf{S}}(k)\hat{\mathbf{S}}^H(k) \quad \dots \quad (12)$$

P(k) of the left side of Equation (11) denotes the reliability of symbol replica generation. Accordingly, if the reliability is 100%, P(k) becomes $I_{NT}$, that is, a unit matrix of T rows and T columns, and A(k) of the left side of Equation (12) becomes a zero matrix of T rows and T columns. For a better understanding, an extreme state in which P(k) is the unit matrix and A(k) is the zero matrix is considered. In this case, Equation (10) becomes $W^H(k)=H^H_B(k)(H_B(k)H^H_B(k))^{-1}$. $W^H(k)$ is a matrix of T rows and $N_B$ columns, and is an $R_B(k)N_B$-dimensional vector. Thus, $W^H(k)R_B(k)$ is a T-dimensional vector, and $S(k)=W^H(k)R_B(k)$. $W^H(k)R_B(k)$ is an output of a signal separating unit 302. Thus, in the extreme state, $W^H(k)R_B(k)$ indicates that information bits, which are transmission signals, are completely reproduced. Even in the absence of the extreme state, it is possible to completely reproduce the information bits, which are the transmission signals, in a wide transmission environment in a state in which the number of reception antennas is small according to this embodiment. Furthermore, this characteristic is significantly improved in combination with an error correction code. In Equation (10), H⁻(k) is N1 copies of a 1st row of H(k), $N_2$ copies of a 2nd row, $\cdots$, $N_R$ copies of an Rth row, and is a matrix of $N_B$ rows and T columns. $H_B(k)$ is a matrix of $N_B$ rows and T columns having transfer functions of multipaths after division as elements. $\sigma_n^2$ is noise power. IN denotes a unit matrix of N rows and N columns.

FIG. 3 is a schematic block diagram showing a configuration of the signal detecting unit 206a (FIG. 2) of the radio reception device 200 according to the first embodiment of the present invention. The signal detecting unit 206a includes the reception signal dividing unit 301, the signal separating unit 302, a symbol replica generating unit 303, a division replica generating unit 304, and a multipath dividing unit 305.

The reception signal dividing unit 301 divides frequency domain reception signals capable of obtaining from the FFT units 205-1 to 205-R (FIG. 2) based on multipaths using division replicas capable of obtaining from the division replica generating unit 304, and outputs the divided signals to the signal separating unit 302. The reception signal dividing unit 301 generates $R_B(k)$, which is reception signals after multipath division using Equation (8).

The signal separating unit 302 performs MIMO signal separation by regarding signals output by the reception signal dividing unit 301 as reception signals received by the reception antennas 201-1 to 201-R. For example, if linear processing such as MMSE is performed, the signal separating unit 302 performs MIMO signal separation on signals output by the reception signal separating unit 301 using the propagation channel estimation values output by the propagation channel estimating unit 209, propagation channel estimation values after the multipath division output by the multipath dividing unit 305, symbol replicas generated by the symbol replica generating unit 303, and the MMSE weight $W_H(k)$ as shown in Equation (10), and outputs the separated signals to the demodulation units 207-1 to 207-T (FIG. 2). In the case of QPSK modulation including bits $b_0$ and $b_1$, a symbol replica X generated by the symbol replica generating unit 303 is expressed as shown in the following Equation (13).

$$X = \frac{1}{\sqrt{2}} \tanh\left(\lambda(b_0)/2\right) + \frac{j}{\sqrt{2}} \tanh\left(\lambda(b_1)/2\right) \qquad \cdots \qquad (13)$$

In this regard, in Equation (13), X is a symbol replica representing an expectation value of a modulation symbol. Also, tanh is a hyperbolic tangent function. Also, j is an imaginary unit satisfying $j^2 = -1$.

The division replica generating unit 304 generates reception replicas for multipath division using the symbol replicas output by the symbol replica generating unit 303 and the propagation channel estimation values after the multipath division output by the multipath dividing unit 305, and outputs the reception replicas for multipath division to the signal separating unit 302.

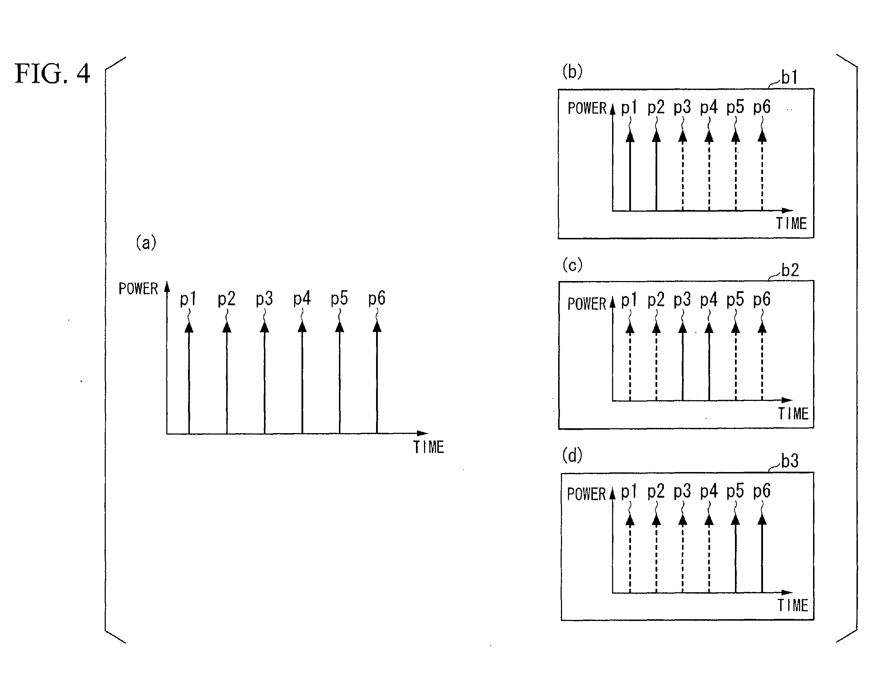

FIGS. 4(a) to 4(d) are diagrams showing an example of the processing of multipath division of the multipath dividing unit 305 (FIG. 3) according to the first embodiment of the present invention. In FIGS. 4(a) to 4(d), the horizontal axis represents time and the vertical axis represents power.

FIG. 4(a) shows an example of a multipath delay profile. p1 to p6 represent preceding waves or delay waves. In the following description, a preceding wave and a delay wave are collectively referred to as a delay wave.

Here, the delay waves p1 to p6 of FIG. 4(a) are multipath-divided into 3 blocks. Propagation channels after multipath division become blocks b1, b2, and b3 shown in FIGS. 4(b), 4(c), and 4(d). The block b1 includes the delay waves p1 and p2 among the delay waves p1 to p6. The block b2 includes the delay waves p3 and p4 among the delay waves p1 to p6. The block b3 includes the delay waves p5 and p6 among the delay waves p1 to p6.

The reception signal dividing unit 301 divides reception signals into signals passing through the propagation channels of the blocks b1, b2, and b3. Thus, for example, if the division replica generating unit 304 generates a reception signal passing through the propagation channel of the block b1, reception replicas are generated using the propagation channels of the delay waves p3 to p6.

The reception signal dividing unit 301 generates a reception signal passing through the propagation channel of the block b1 by subtracting the reception replicas, generated from the delay waves p3 to p6, from the reception signal. Likewise, the reception signal dividing unit 301 generates a reception signal passing through the propagation channel of the block b2 by subtracting reception replicas, generated from the delay waves p1, p2, p5, and p6, from the reception signal. The reception signal dividing unit 301 generates a reception signal passing through the propagation channel of the block b3 by subtracting reception replicas, generated from the delay waves p1 to p4, from the reception signal.

In addition, it is impossible to generate a reception replica if no decoding process is performed. Thus, the reception signal dividing unit 301 performs a MIMO signal separation process of the related art without performing a multipath division process.

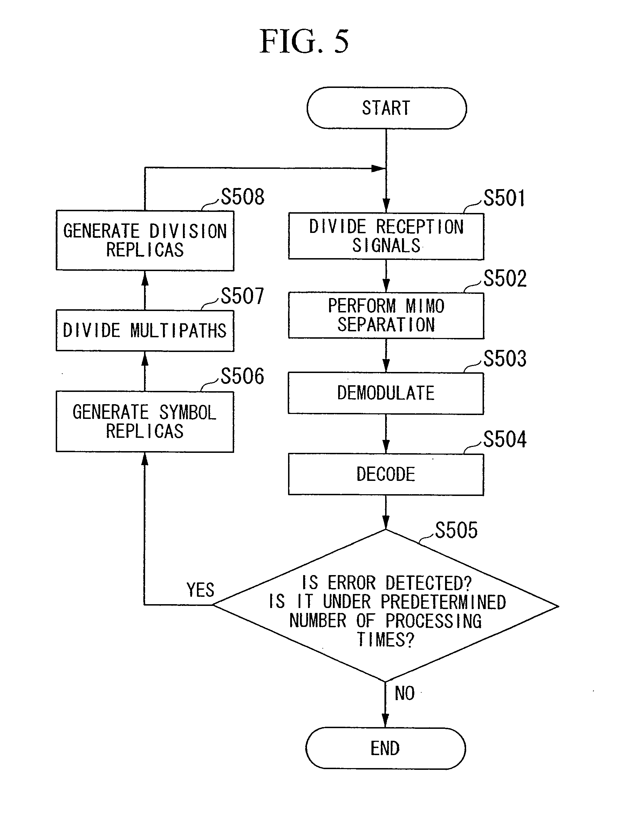

FIG. 5 is a flowchart showing a reception process of the radio reception device 200 (FIG. 2) according to the first embodiment of the present invention.

First, the reception signal dividing unit 301 (FIG. 3) of the signal detecting unit 206a divides frequency domain reception signals output from the FFT units 205-1 to 205-R based on multipaths using division replicas generated in step S508 (step S501).

The signal separating unit 302 (FIG. 3) of the signal detecting unit 206a performs MIMO signal separation by regarding the reception signals divided in step S501 as signals received by the reception antennas 201-1 to 201-R (step S502).

The demodulation units 207-1 to 207-T (FIG. 2) demodulate the MIMO separated signals of step S502 (step S503), and calculate coded bit LLRs.

The decoding units 208-1 to 208-T (FIG. 2) perform an error correction decoding process on the coded bit LLRs calculated in step S503 (step S504).

The decoding units 208-1 to 208-T (FIG. 2) determine whether or not an error is detected from the results of the error correction decoding process in step S504 (step S505). Also, the decoding units 208-1 to 208-T (FIG. 2) determine whether or not the error correction decoding process does not reach the predetermined number of processing times (step S505). If no error is detected, or if the predetermined number of processing times is reached, in step S505 ("NO" in step S505), the decoding units 208-1 to 208-T output information bits and the processing of the flowchart of FIG. 5 is terminated.

On the other hand, if the error is detected, or if the predetermined number of processing times is not reached, in step S505 ("YES" in step S505), the decoding units 208-1 to 208-T output the coded bit LLRs to the symbol replica generating unit 303 of the signal detecting unit 206a.

The symbol replica generating unit 303 (FIG. 3) of the signal detecting unit 206a generates symbol replicas using the coded bit LLRs output by the decoding units 208-1 to 208-T in step S505 (step S506).

The multipath dividing unit 305 (FIG. 3) of the signal detecting unit 206a divides propagation channel estimation values output by the propagation channel estimating unit 209 (FIG. 2) into multipaths (step S507).

The division replica generating unit 304 (FIG. 3) of the signal detecting unit 206a generates division replicas to be used for dividing reception signals using the symbol replicas generated in step S506 and the multipaths divided in step S507 (step S508). The processing moves to step S501.

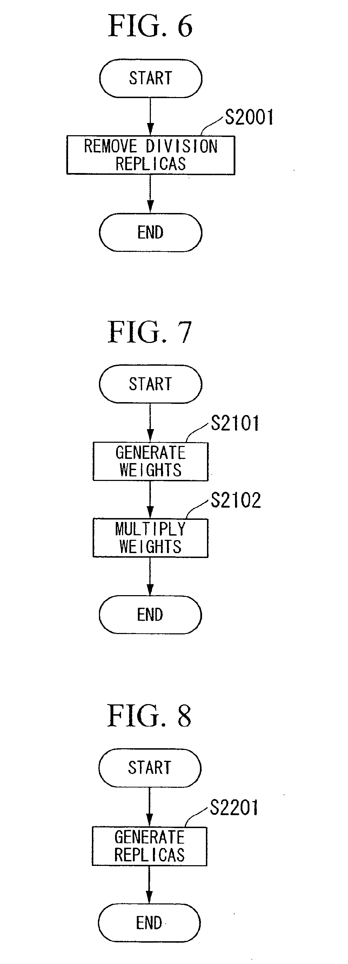

FIG. 6 is a flowchart showing processing of the reception signal dividing unit 301 (FIG. 3) according to the first embodiment of the present invention. The reception signal dividing unit 301 removes division replicas from reception signals by subtracting the division replicas from the reception signals (step S2001), and performs multipath division on the reception signals. The division replicas are reception replicas of paths other than desired extraction multipaths. As shown in Equation (8), reception replicas of desired extraction paths may be added after subtracting reception signal replicas from the reception signals.

FIG. 7 is a flowchart showing processing of the signal separating unit 302 (FIG. 3) according to the first embodiment of the present invention. First, the signal separating unit 302 generates MMSE weights of Equation (10) based on propagation channel estimation values and propagation channel estimation values after multipath division (step S2101).

The signal separating unit 302 performs MIMO signal separation by multiplying MMSE weights generated in step S2101 by the reception signals after multipath division (step S2102).

FIG. 8 is a flowchart showing processing of the division replica generating unit 304 (FIG. 3) according to the first embodiment of the present invention. The division replica generating unit 304 generates division replicas, which are replicas other than a desired extraction path, from symbol replicas and the propagation channel estimation values for division (step S2201).

For example, the multipath division may be performed so that propagation channel power after division is identical, may be performed so that the number of propagation channels after division is identical, may be performed so that a largest time difference between paths after division is identical, or may be performed based on other criteria. The number of multipath divisions may be arbitrarily set by the reception antennas 201-1 to 201-R. For example, the number of divisions may be identically set by the reception antennas 201-1 to 201-R. A reception antenna that does not perform division may exist, and multipath division may be performed by at least one reception antenna.

In addition, the case of using an MMSE of a linear operation in MIMO signal separation has been described in the first embodiment, but the present invention is not limited thereto. Other MIMO signal separation methods may be used. For example, it is possible to use maximum likelihood detection (MLD), sphere decoding, which is a method of performing a calculation amount reduction type of MLD, or QR decomposition and M-algorithm MLD (QRM-MLD: MLD in which a calculation amount is reduced using QR decomposition and an M algorithm) for reception signals R(k) after multipath division shown in Equation (7). For example, if the MLD is used, a pattern in which $\alpha$ shown in Equation (14) is minimized among all patterns of transmission signals is detected as a transmission signal.

$$\alpha = || R_B(k) - H_B(k) S_C(k) ||^2 \cdots \quad (14)$$

In Equation (14), $S_C(k)$ denotes one pattern of the transmission signal.

As described above, the performance of MIMO signal separation can be improved, without increasing the number of reception antennas of the radio reception device 200, by dividing reception signals based on multipaths, regarding the divided signals as signals received by the reception antennas, and performing the MIMO signal separation.

Even when the number of reception antennas of the radio reception device 200 is sufficient to perform MIMO separation, the performance of MIMO signal separation is degraded if a fading correlation between transmission/reception antennas is high. On the other hand, there is an advantageous effect in that a correlation of a receiving side is lowered if the reception signals are divided based on multipaths. For example, it is effective even in an environment in which a reception correlation is high as in a base station of uplink.

As described above, the radio communication system (also referred to as the communication system) according to the first embodiment of the present invention includes the radio transmission device 100 (also referred to as the transmission device) and the radio reception device 200 (also referred to as the reception device).

The radio transmission device 100 (FIG. 1) includes the multiple transmission antennas 109-1 to 109-T.

The radio units 108-1 to 108-T (also referred to as the transmitting units) of the radio transmission device 100 transmit transmission signals from the multiple transmission antennas 109-1 to 109-T to the radio reception device 200.

The radio reception device 200 (FIG. 2) includes the multiple reception antennas 201-1 to 201-R, which receive multiple transmission signals transmitted from the multiple transmission antennas 109-1 to 109-T of the radio transmission device 100. The case where the radio reception device 200 has the multiple reception antennas 201-1 to 201-R has been described in this embodiment, but the present invention is not limited thereto. It is preferable that the radio reception device 200 have at least one reception antenna.

The FFT units 205-1 to 205-R (also referred to as the Fourier transform units) of the radio reception device 200 transform the signals received by the reception antennas 201-1 to 201-R from a time domain into a frequency domain. The propagation channel estimating unit 209 of the radio reception device 200 calculates propagation channel estimation values by estimating propagation channels between the multiple transmission antennas 109-1 to 109-T of the radio transmission device 100 and the reception antennas 201-1 to 201-R of the radio reception device 200.

The signal detecting unit 206a of the radio reception device 200 detects the multiple transmission signals by dividing multipaths from the signals, which are transformed into the frequency domain by the FFT units 205-1 to 205-R. More specifically, the signal detecting unit 206a generates multipath division signals divided based on the multipaths from the signals, which are transformed into the frequency domain by the FFT units 205-1 to 205-R, using coded bit LLRs output by the decoding units 208-1 to 208-T, and detects the multiple transmission signals using the multipath division signals.

The signal detecting unit 206a generates linear weights using the propagation channel estimation values, the propagation channel estimation values divided by the multipath dividing unit 305, and the symbol replicas, and detects the multiple transmission signals using the linear weights.

The demodulation units 207-1 to 207-T of the radio reception device 200 demodulate the signals detected by the signal detecting unit 206a, and generate coded bit LLRs, which are reliability information of bits.

The decoding units 208-1 to 208-T of the radio reception device 200 perform an error correction decoding process on the coded bit LLRs generated by the demodulation units 207-1 to 207-T.

As shown in FIG. 3, the signal detecting unit 206a includes the symbol replica generating unit 303, which generates the symbol replicas that are replicas of modulation symbols from the coded bit LLRs, the multipath dividing unit 305, which divides the propagation channel estimation values based on the multipaths, the division replica generating unit 304, which generates the division replicas for generating the multipath division signals from the symbol replicas and the propagation channel estimation values divided by the multipath dividing unit 305, the reception signal dividing unit 301, which subtracts the division replicas from the signals that are transformed into the frequency domain by the FFT units 205-1 to 205-R, and generates the multipath division signals, and the signal separating unit 302, which detects the multiple transmission signals from the multipath division signals.

In the first embodiment of the present invention, good transmission characteristics can be obtained between the radio transmission device 100 and the radio reception device 200, without increasing the number of reception antennas of the radio reception device 200, by implementing the configuration as described above.

In particular, in this embodiment, processing is significantly facilitated since necessary signal processing is performed on the frequency axis.

(Second Embodiment)

Next, the second embodiment of the present invention will be described. According to the second embodiment of the present invention, a radio communication system includes a radio transmission device and a radio reception device. Since the radio transmission device and the radio reception device according to the second embodiment have the same configurations as the radio transmission device 100 (FIG. 1) and the radio reception device 200 (FIG. 2) according to the first embodiment, a description thereof is omitted. However, the radio reception device according to the second embodiment has a signal detecting unit 206b in place of the signal detecting unit 206a of the radio reception device 200.

In the first embodiment, the signal detecting unit 206a of the radio reception device 200 performs MIMO signal separation using the reliability of symbol replica generation. In the second embodiment, the signal detecting unit 206b of the radio reception device performs MIMO signal separation using Equation (18) to be described later.

If Equation (10) described in the first embodiment is modified using a lemma of an inverse matrix, the following Equations (15) to (17) are given.

$$\mathbf{W}^H(k) = \mathbf{P}^{-1}(k)(\mathbf{P}^{-1}(k) + \mathbf{\Gamma}(k))^{-1}\mathbf{H}_B^H(k)\mathbf{\Sigma}^{-1}(k) \quad \cdots \quad (15)$$

$$\Sigma(k) = \mathbf{H}(k)\Lambda(k)\mathbf{H}^H(k) + \sigma_n^2 \mathbf{I}_{RN_B} \quad \cdots \quad (16)$$

$$\Gamma(k) = \mathbf{H}_B^H(k)\Sigma^{-1}(k)\mathbf{H}_B(k) \quad \cdots \quad (17)$$

Thereby, an output Z(k) after MIMO separation is expressed as shown in the following Equation (18).

$$
\begin{aligned}
\mathbf{Z}(k) &= \mathbf{W}^H(k)\tilde{\mathbf{R}}(k) \\
&= \mathbf{P}^{-1}(k)(\mathbf{P}^{-1}(k) + \Gamma(k))^{-1}(\Gamma(k)\hat{\mathbf{S}}(k) + \mathbf{H}_B^H(k)\Sigma^{-1}(k)\tilde{\mathbf{R}}(k))
\end{aligned}
$$
$$\cdots \quad (18)$$

In Equation (18), signals after the MIMO separation are generated by first removing reception signal replicas from reception signals and reproducing the signals thereafter. If Equation (10) is used as in the first embodiment, it is necessary to consider multipath division when the reception signal replicas are removed. However, if Equation (18) is used as in the second embodiment, it is unnecessary to consider multipath division when the reception signal replicas are removed.

In the second embodiment, information necessary for the multipath division such as a block size of multipath division or the number of divisions can be determined using signals after the reception signal replicas are removed.

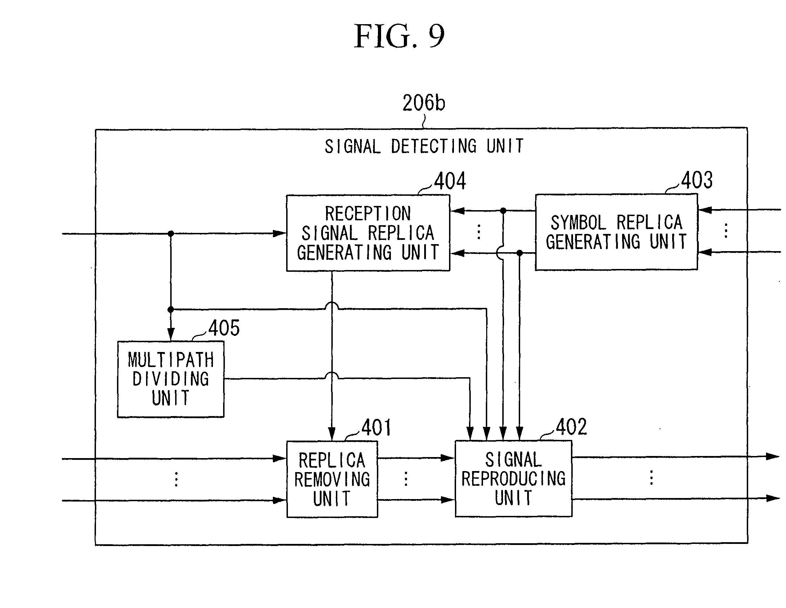

FIG. 9 is a schematic block diagram showing a configuration of the signal detecting unit 200b of the radio reception device according to the second embodiment of the present invention. The signal detecting unit 206b includes a replica removing unit 401, a signal reproducing unit 402, a symbol replica generating unit 403, a reception signal replica generating unit 404, and a multipath dividing unit 405. The signal detecting unit 206b performs processing based on Equation (18).

Reception signals from the FFT units 205-1 to 205-R are input to the replica removing unit 401 of the signal detecting unit 206b. The replica removing unit 401 subtracts reception signal replicas generated by the reception signal replica generating unit 404. Using Equation (9), the replica removing unit 401 removes the reception signal replicas from the reception signals, and outputs the signals to the signal reproducing unit 402.

The multipath dividing unit 405 calculates propagation channel estimation values after multipath division using propagation channel estimation values obtained from the propagation channel estimating unit 209 (FIG. 2), and outputs the propagation channel estimation values to the signal reproducing unit 402.

The symbol replica generating unit 403 generates symbol replicas, which are replicas of modulation symbols, from bit LLRs output by the decoding units 208-1 to 208-T (FIG. 2), and outputs the symbol replicas to the signal reproducing unit 402 and the reception signal replica generating unit 404.

The reception signal replica generating unit 404 generates the reception signal replicas using the propagation channel estimation values and the symbol replicas, and outputs the reception signal replicas to the replica removing unit 401.

The signal reproducing unit 402 reconfigures desired signals using signals output by the replica removing unit 401, the propagation channel estimation values after the multipath division, and the symbol replicas, obtains signals after MIMO signal separation, and outputs the signals to the demodulation units 208-1 to 208-T (FIG. 2). The signal reproducing unit 402 obtains MMSE weights $W^H(k)$ using Equation (15).

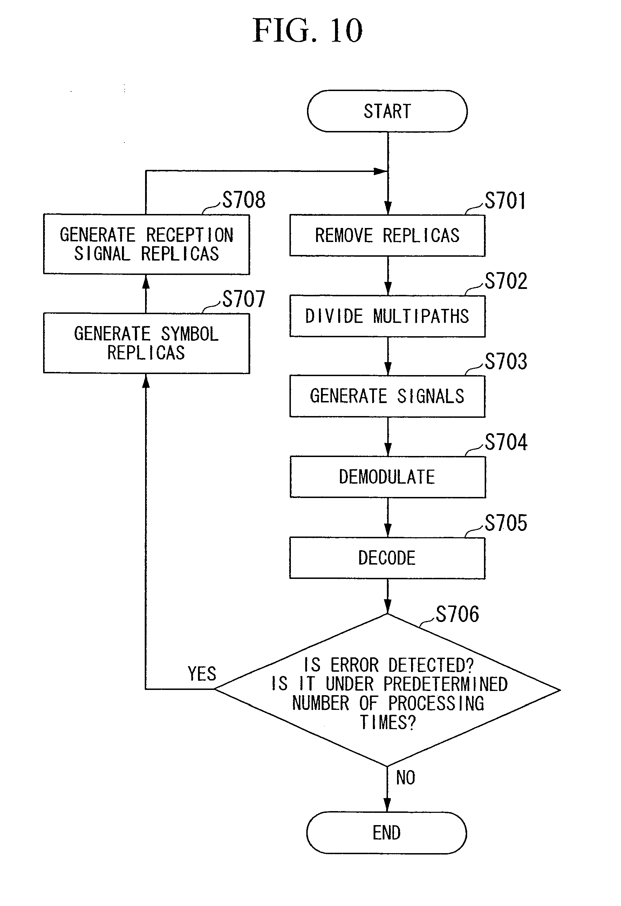

FIG. 10 is a flowchart showing a reception process of the radio reception device according to the second embodiment of the present invention.

First, the replica removing unit 401 (FIG. 9) of the signal detecting unit 206b removes reception signal replicas generated in step S708 from frequency domain reception signals output by the FFT units 205-1 to 205-R (step S701).

The multipath dividing unit 405 (FIG. 9) of the signal detecting unit 206b divides propagation channel estimation values of multipaths (step S702).

The signal reproducing unit 402 (FIG. 9) of the signal detecting unit 206b generates signals after MIMO signal separation based on the signals from which the reception replicas are removed in step S701 and the propagation channel estimation values divided in step S702 (step S703).

The demodulation units 207-1 to 207-T (FIG. 2) obtain coded bit LLRs by demodulating the signals after the MIMO signal separation (step S704).

The decoding units 208-1 to 208-T (FIG. 2) perform an error correction decoding process on the coded bit LLRs obtained in step S704 (step S705).

The decoding units 208-1 to 208-T (FIG. 2) determine whether or not an error is detected from the results of the error correction decoding process in step S705 (step S706). The decoding units 208-1 to 208-T (FIG. 2) determine whether or not the error correction decoding process of step S705 does not reach the predetermined number of processing times (step S706). If no error is detected, or if the predetermined number of processing times is reached, in step S706 ("NO" in step S706), the decoding units 208-1 to 208-T output information bits and the processing of the flowchart of FIG. 10 is terminated.

On the other hand, if the error is detected, or if the predetermined number of processing times is not reached, in step S706 ("YES" in step S706), the decoding units 208-1 to 208-T output the coded bit LLRs to the symbol replica generating unit 403 of the signal detecting unit 206b.

The symbol replica generating unit 403 (FIG. 9) of the signal detecting unit 206b generates symbol replicas from the coded bit LLRs (step S707).

The reception signal replica generating unit 404 (FIG. 9) of the signal detecting unit 200b generates replicas of reception signals (step S707). The processing moves to step S701.

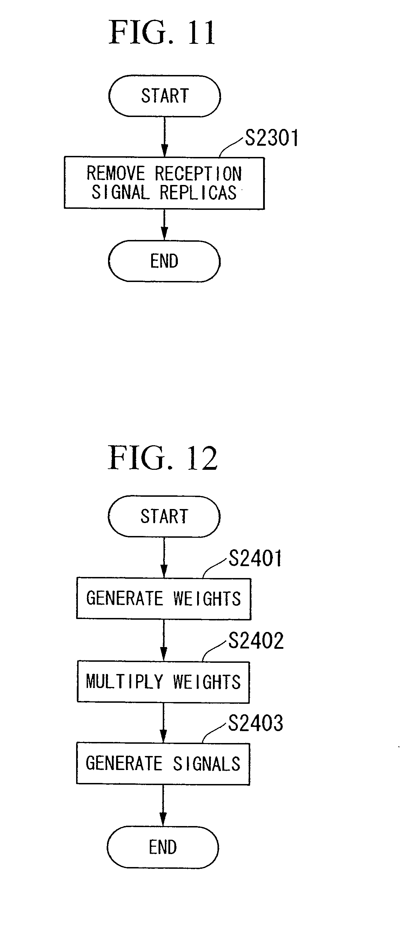

FIG. 11 is a flowchart showing processing of the replica removing unit 401 (FIG. 9) according to the second embodiment of the present invention. The replica removing unit 401 removes reception signal replicas from reception signals (step S2301), and generates signals extended by the number of divisions. In step S2301, for example, $R^-(k)$ of Equation (8) is generated.

FIG. 12 is a flowchart showing processing of the signal reproducing unit 402 (FIG. 9) according to the second embodiment of the present invention. The signal reproducing unit 402 generates weights $\Sigma^{-1}(k)$ of Equation (16) from propagation channel estimation values (step S2401).

The signal reproducing unit 402 multiplies reception signals from which reception signal replicas are removed, for example, R(k), by $H_B(k)\Sigma^{-1}(k)$, which are products of propagation channel estimation values $H_B(k)$ after multipath division and the weights $\Sigma^{-1}(k)$ generated in step S2401 (step S2402).

The signal reproducing unit 402 adds symbol replicas to signals obtained in step S2402, and generates signals after MIMO signal separation as shown in Equation (18) (step S2403).

As described above, the radio communication system according to the second embodiment has the radio transmission device 100 and the radio reception device 200 as in the first embodiment.

The radio transmission device 100 (FIG. 1) has the multiple transmission antennas 109-1 to 109-T.

The radio units 108-1 to 108-T of the radio transmission device 100 respectively transmit transmission signals from the multiple transmission antennas 109-1 to 109-T to the radio reception device 200.

The radio reception device 200 includes the reception antennas 201-1 to 201-R, which receive multiple transmission signals transmitted from the multiple transmission antennas 109-1 to 109-T of the radio transmission device 100. The case where the radio reception device 200 has the multiple reception antennas has been described in this embodiment, but the present invention is not limited thereto. It is preferable that the radio reception device 200 have at least one reception antenna.

The FFT units 205-1 to 205-R of the radio reception device 200 transform signals received by the reception antennas 201-1 to 201-R from a time domain into a frequency domain.

The propagation channel estimating unit 209 of the radio reception device 200 estimates propagation channels between the multiple transmission antennas of the radio transmission device 100 and the reception antennas 201-1 to 201-R of the radio reception device 200, and calculates propagation channel estimation values.

The signal detecting unit 206b of the radio reception device 200 detects multiple transmission signals for each desired transmission signal by dividing multipaths from the signals, which are transformed into the frequency domain by the FFT units 205-1 to 205-R.

The signal detecting unit 206b includes the symbol replica generating unit 403, which generates symbol replicas that are replicas of modulation symbols, from coded bit LLRs on which the decoding units 208-1 to 208-T perform an error correction decoding process, the reception signal replica generating unit 404, which generates reception signal replicas from the symbol replicas and the propagation channel estimation values, the replica removing unit 401, which removes the reception signal replicas from the signals, which are transformed into the frequency domain by the FFT units 205-1 to 205-R, the multipath dividing unit 405, which divides the propagation channel estimation values based on the multipaths, and the signal reproducing unit 402, which detects the multiple transmission signals using the signals from which the replica removing unit 401 removes the reception signal replicas, the propagation channel estimation values, the propagation channel estimation values divided by the multipath dividing unit 405, and the symbol replicas.

The demodulation units 207-1 to 207-T of the radio reception device 200 demodulate the signals detected by the signal detecting unit 206b, and generate the coded bit LLRs, which are reliability information of bits.
The decoding units 208-1 to 208-T of the radio reception device 200 perform an error correction decoding process on the coded bit LLRs generated by the demodulation units 207-1 to 207-T.

In the second embodiment of the present invention, good transmission characteristics can be obtained between the radio transmission device 100 and the radio reception device 200, without increasing the number of reception antennas of the radio reception device 200, by implementing the configuration as described above.
In the second embodiment, first, reception signal replicas are removed from reception signals and thereafter the signals are reproduced. Thus, it is unnecessary to determine how to divide multipaths upon replica generation, and it is possible to improve the accuracy of multipath division since how to divide the multipaths can be determined after replica removal.

(Third Embodiment)

Next, the third embodiment of the present invention will be described. According to the third embodiment of the present invention, a radio communication system includes a radio transmission device and a radio reception device. Since the radio transmission device and the radio reception device according to the third embodiment have the same configurations as the radio transmission device 100 (FIG. 1) and the radio reception device 200 (FIG. 2) according to the first embodiment, a description thereof is omitted. However, the radio reception device according to the third embodiment, like the second embodiment, has a signal detecting unit 206b in place of the signal detecting unit 206a.

In the first and second embodiments, reception signals are divided based on multipaths, and MIMO signal separation is performed by regarding the divided signals as signals received by the reception antennas 201-1 to 201-R. Thereby, the performance of MIMO separation can be improved since it can be regarded that the number of reception antennas is increased even when the number of reception antennas of the radio reception device 200 is not increased.
In the third embodiment, the performance of MIMO signal separation is improved by the radio reception device using an inter-stream interference canceller, which removes interference between MIMO streams. Here, the case of using a parallel interference canceller (PIC) as the inter-stream interference canceller will be described.

The inter-stream interference canceller may be applied to the first embodiment. The interference between MIMO streams is interference between different data streams transmitted by the radio transmission device. Here, the case of transmitting different data from the transmission antennas 109-1 to 109-T of the radio transmission device 100 will be described.

If the MIMO PIC is applied to the second embodiment, $Z_t(k)$, which is an output after MIMO signal separation of a signal transmitted by a $t^{th}$ transmission antenna, is expressed as shown in the following Equations (19) and (20).
$$\mathbf{Z}_t(k) = \frac{1}{1 + \gamma_t(k)|\hat{\mathbf{S}}_t(k)|^2}\left(\gamma_t(k)\hat{\mathbf{S}}_t(k) + (\mathbf{H}_B(k))_t^H \Sigma^{-1}(k)\tilde{\mathbf{R}}(k)\right) \quad \cdots \quad (19)$$

$$\gamma_t(k) = (\mathbf{H}_B(k))_t^H \Sigma^{-1}(k)(\mathbf{H}_B(k))_t \quad \cdots \quad (20)$$

In Equation (19), $S^{\wedge}{}_t(k)$ and $(H_B(k))_t$ denote $t^{th}$ transmission antenna components of $S^{\wedge}(k)$ and $H_B(k)$ of Equation (18). In Equation (19), a signal after MIMO signal separation in a desired antenna is generated by removing a reception signal replica from a reception signal and reproducing the signal of the desired antenna thereafter.
In the third embodiment, the processing of removing the reception signal replica from the reception signal is the same as that of the second embodiment. However, a difference between the second embodiment and the third embodiment is that only a signal of a desired antenna is reproduced, or all signals transmitted from the transmission antennas are reproduced, after replica removal.

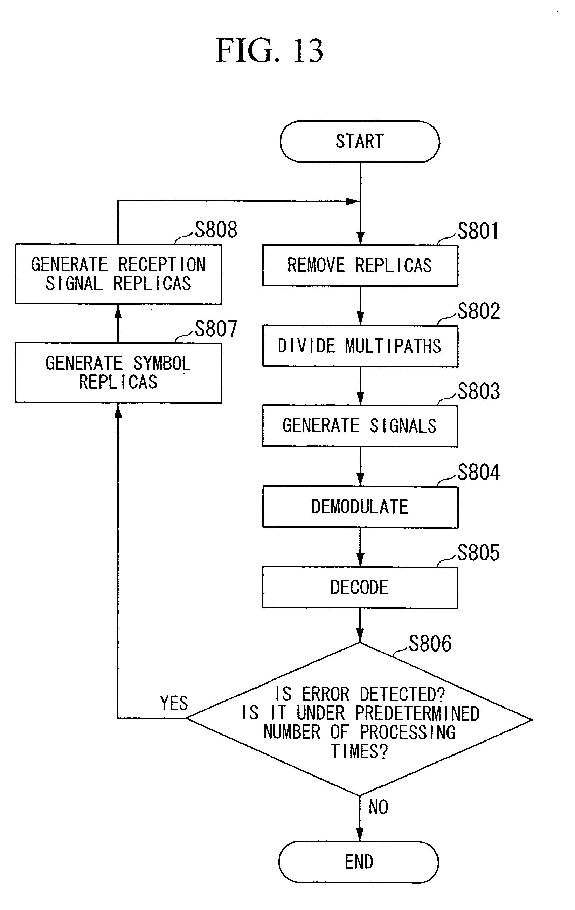

FIG. 13 is a flowchart showing a reception process of the radio reception device according to the third embodiment of the present invention.
First, the replica removing unit 401 (FIG. 9) of the signal detecting unit 206b removes reception signal replicas generated in step S808 from frequency domain reception signals output by the FFT units 205-1 to 205-R (FIG. 2) (step S801).

The multipath dividing unit 405 of the signal detecting unit 206b divides propagation channel estimation values of multipaths (step S802).

The signal reproducing unit 402 (FIG. 9) of the signal detecting unit 206b generates a signal after MIMO signal separation for each of the transmission antennas 109-1 to 109-T based on the signals from which the reception signal replicas are removed in step S801 and the propagation channel estimation values divided in step S802 (step S803).

The demodulation units 207-1 to 207-T obtain coded bit LLRs by demodulating the signals after MIMO signal separation (step S804).

The decoding units 208-1 to 208-T perform an error correction decoding process on the obtained coded bit LLRs (step S805).

The decoding units 208-1 to 208-T (FIG. 2) determine whether or not an error is detected from the results of the error correction decoding process of step S805 (step S806). The decoding units 208-1 to 208-T (FIG. 2) determine whether or not the error correction decoding process of step S805 does not reach the predetermined number of processing times (step S806). If no error is detected, or if the predetermined number of processing times is reached, in step S806 ("NO" in step S806), the decoding units 208-1 to 208-T output information bits, and the processing of the flowchart of FIG. 13 is terminated.

On the other hand, if the error is detected, or if the predetermined number of processing times is not reached, in step S806 ("YES" in step S806), the decoding units 208-1 to 208-T output the coded bit LLRs to the symbol replica generating unit 403 of the signal detecting unit 206b.

The symbol replica generating unit 403 of the signal detecting unit 206b generates symbol replicas from the coded bit LLRs (step S807).

The reception signal replica generating unit 404 of the signal detecting unit 206b generates replicas of reception signals (step S808).

In the third embodiment as described above, MIMO signal separation is performed using signals into which reception signals are divided based on multipaths, and interference between MIMO streams is removed. Thus, the performance of MIMO signal separation can be further improved as compared with those of the first and second embodiments.

The case where the PIC is applied as an interference canceller between MIMO streams has been described in the third embodiment, but the present invention is not limited thereto. A successive interference canceller (SIC) may be applied.

The case where a signal is reproduced for each transmission antenna as the PIC has been described in the third embodiment, but signals of multiple transmission antennas may be reproduced.

(Fourth Embodiment)

Next, the fourth embodiment of the present invention will be described. In the fourth embodiment, the case where the present invention is applied to single carrier-frequency division multiple access (SC-FDMA) will be described. The SC-FDMA is one scheme of single carrier transmission.

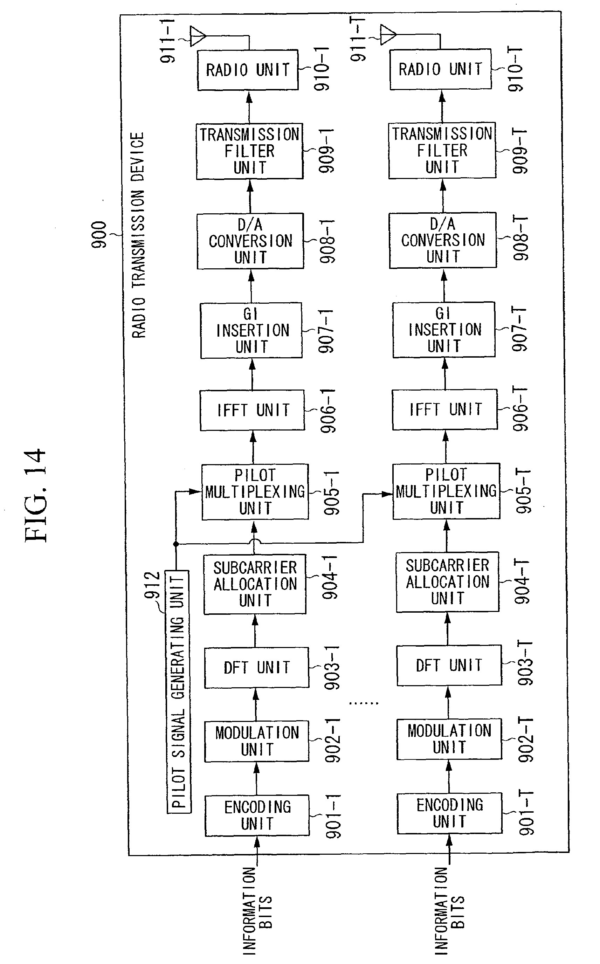

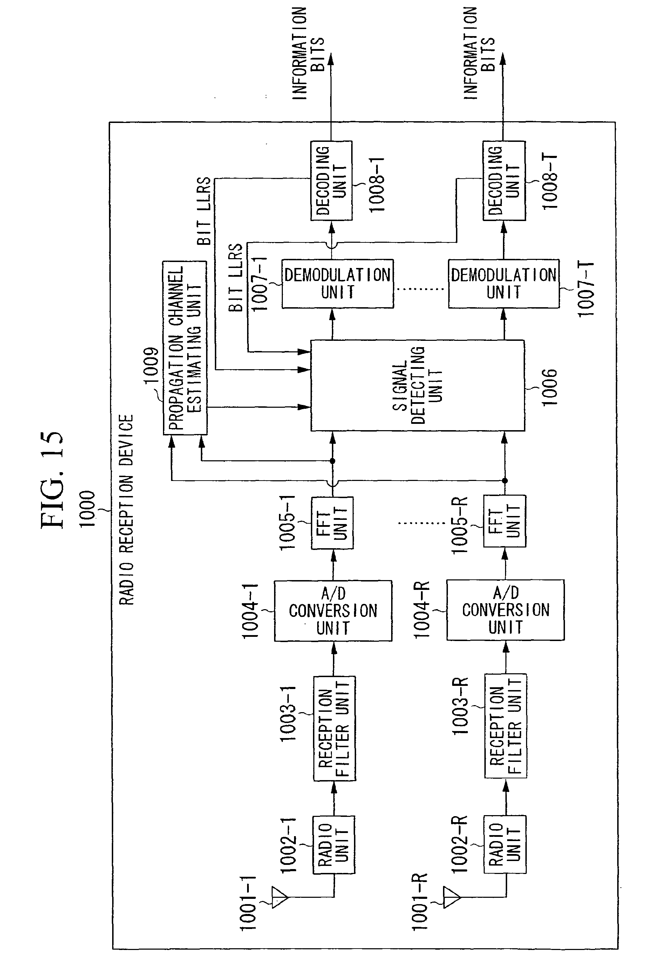

A radio communication system according to the fourth embodiment of the present invention includes a radio transmission device 900 (FIG. 14) and a radio reception device 1000 (FIG. 15).

FIG. 14 is a schematic block diagram showing a configuration of the radio transmission device 900 according to the fourth embodiment of the present invention. The radio transmission device 900 includes encoding units 901-1 to 901-T, modulation units 902-1 to 902-T, DFT (discrete Fourier transform) units 903-1 to 903-T, subcarrier allocation units 904-1 to 904-T, pilot multiplexing units 905-1 to 905-T, IFFT units 906-1 to 906-T, GI insertion units 907-1 to 907-T, D/A conversion units 908-1 to 908-T, transmission filter units 909-1 to 909-T, radio units 910-1 to 910-T, transmission antenna units 911-1 to 911-T, and a pilot signal generating unit 912. In FIG. 14, T is 2 or an integer greater than 2.

The encoding unit 901-1 outputs coded bits obtained by performing error correction coding on information bits output by an upper layer of the radio transmission device 900, to the modulation unit 902-1.

The modulation unit 902-1 maps the coded bits output by the encoding unit 901-1 to a modulation symbol, and outputs the modulation symbol to the DFT unit 903-1.

The DFT unit 903-1 transforms the modulation symbol output by the modulation unit 902-1 from a time domain signal into a frequency domain signal, and outputs the frequency domain signal to the subcarrier allocation unit 904-1.

The subcarrier allocation unit 904-1 maps the signal output by the DFT unit 903-1 to subcarriers, and outputs the signal to the pilot multiplexing unit 905-1.

A pattern of mapping to the subcarriers may be random, or may have a fixed rule so as to reduce a peak to average power ratio (PAPR).

The pilot signal generating unit 912 generates a pilot signal, and outputs the pilot signal to each of the pilot multiplexing units 905-1 to 905-T.

The pilot multiplexing unit 905-1 multiplexes the pilot signal generated by the pilot signal generating unit 912 with the signal output by the subcarrier allocation unit 904-1, and outputs the multiplexed signal to the IFFT unit 906-1.

The IFFT unit 906-1 transforms the signal output by the pilot multiplexing unit 905-1 from a frequency domain signal into a time domain signal, and outputs the time domain signal to the GI insertion unit 907-1.

The GI insertion unit 907-1 adds a GI to the signal output by the IFFT unit 906-1, and outputs the signal to the D/A conversion unit 908-1.

The D/A conversion unit 908-1 converts the signal output by the GI insertion unit 907-1 from a digital signal into an analog signal, and outputs the converted analog signal to the transmission filter unit 909-1.

The transmission filter unit 909-1 shapes a waveform of the signal output by the D/A conversion unit 908-1, and outputs the waveform-shaped signal to the radio unit 910-1.

The radio unit 910-1 converts the signal output by the transmission filter unit 909-1 from a baseband signal into a radio frequency signal, and outputs the radio frequency signal to the transmission antenna 911-1.

The transmission antenna 911-1 transmits the signal output by the radio unit 910-1 to the radio reception device 1000 (FIG. 15).

The radio transmission device 900 generates multiple (T) transmission signals in parallel as described above. The radio transmission device 900 transmits the multiple generated signals to the radio reception device 1000 at the same frequency and timing using the multiple transmission antennas 911-1 to 911-T. The transmission signals are received by the radio reception device 1000 through multipath propagation channels.

Since the configurations of the encoding units 901-2 (not shown) to 901-T, the modulation units 902-2 (not shown) to 902-T, the DFT units 903-2 (not shown) to 903-T, the subcarrier allocation units 904-2 (not shown) to 904-T, the pilot multiplexing units 905-2 (not shown) to 905-T, the IFFT units 906-2 (not shown) to 906-T, the GI insertion units 907-2 (not shown) to 907-T, the D/A conversion units 908-2 (not shown) to 908-T, the transmission filter units 909-2 (not shown) to 909-T, the radio units 910-2 (not shown) to 910-T, and the transmission antennas 911-2 (not shown) to 911-T are the same as those of the encoding unit 901-1, the modulation unit 902-1, the DFT unit 903-1, the subcarrier allocation unit 904-1, the pilot multiplexing unit 905-1, the IFFT unit 906-1, the GI insertion unit 907-1, the D/A conversion unit 908-1, the transmission filter unit 909-1, the radio unit 910-1, and the transmission antenna 911-1, a description thereof is omitted.

FIG. 15 is a schematic block diagram showing a configuration of the radio reception device 1000 according to the fourth embodiment of the present invention. The radio reception device 1000 includes reception antennas 1001-1 to 1001-R, radio units 1002-1 to 1002-R, reception filter units 1003-1 to 1003-R, A/D conversion units 1004-1 to 1004-R, FFT units 1005-1 to 1005-R, a signal detecting unit 1006, demodulation units 1007-1 to 1007-T, decoding units 1008-1 to 1008-T, and a propagation channel estimating unit 1009. In FIG. 15, R is 1 or an integer greater than 1. In FIG. 15, T is 2 or an integer greater than 2.

The reception antenna 1001-1 receives a signal transmitted by the radio transmission device 900, and outputs the signal to the radio unit 1002-1.

The radio unit 1002-1 converts the signal output by the reception antenna 1001-1 from a radio frequency signal into a baseband signal, and outputs the baseband signal to the reception filter unit 1003-1.

The reception filter unit 1003-1 shapes a waveform of the signal output by the radio unit 1002-1, and outputs the waveform-shaped signal to the A/D conversion unit 1004-1.

The A/D conversion unit 1004-1 converts the signal output by the reception filter unit 1003-1 from an analog signal into a digital signal, and outputs the digital signal to the FFT unit 1005-1.

The FFT unit 1005-1 transforms the signal output by the A/D conversion unit 1004-1 from a time domain signal into a frequency domain signal, and outputs the frequency domain signal as a reception signal to the signal detecting unit 1006 and the propagation channel estimating unit 1009.

The signal detecting unit 1006 separates MIMO multiplexed signals using bit LLRs output by the decoding units 1008-1 to 1008-T, and propagation channel estimation values output by the propagation channel estimating unit 1009, and outputs the signals to the demodulation units 1007-1 to 1007-T.

The demodulation unit 1007-1 calculates bit LLRs by demodulating the signal output by the signal detecting unit 1006, and outputs the bit LLRs to the decoding unit 1008-1.

The decoding unit 1008-1 performs an error correction decoding process on the bit LLRs output by the demodulation unit 1007-1, and outputs information bits. The decoding unit 1008-1 outputs the bit LLRs to the signal detecting unit 1006.

The propagation channel estimating unit 1009 performs propagation channel estimation using pilot signals included in signals output by the FFT units 1005-1 to 1005-R, and outputs the propagation channel estimation result to the signal detecting unit 1006.

Since the configurations of the reception antenna units 1001-2 (not shown) to 1001-R, the radio units 1002-2 (not shown) to 1002-R, the reception filter units 1003-2 (not shown) to 1003-R, the A/D conversion units 1004-2 (not shown) to 1004-R, the FFT units 1005-2 (not shown) to 1005-R, the demodulation units 1007-2 (not shown) to 1007-T, and the decoding units 1008-2 (not shown) to 1008-T are the same as those of the reception antenna unit 1001-1, the radio unit 1002-1, the reception filter unit 1003-1, the A/D conversion unit 1004-1, the FFT unit 1005-1, the demodulation unit 1007-1, and the decoding unit 1008-1, a description thereof is omitted.

A vector R representing a reception signal can be expressed by the following Equations (21) and (22).

$$\mathbf{R} = \mathbf{HFS} + \mathbf{N} \quad \cdots \quad (21)$$

$$\mathbf{S} = \mathbf{MF}_K \mathbf{s} \quad \cdots \quad (22)$$

In this regard, the vector R is an $RN_F$-dimensional reception signal vector. A vector H is a propagation channel matrix of $RN_F$ rows and T columns. A vector F is an FFT matrix having a size $N_F$. A vector N is an $RN_F$-dimensional noise vector. A vector $F_K$ is a DFT matrix having a size K. A vector s is a TK-dimensional transmission signal vector.

A matrix size of the vector $F_K$ is less than or equal to that of the vector F. A vector M represents subcarrier allocation information. A vector S is a signal after DFT is performed on the vector s and allocation to subcarriers is performed.

The side of the radio reception device 1000 performs subcarrier demapping for originally returning subcarrier mapping performed at the side of the radio transmission device 900. A reception signal after the subcarrier demapping is expressed by $R_d(k)=M^T R$. In the following description, the description is continued by setting the vector $R_d$ to the vector R once again. The superscript T denotes a transposed matrix.

A vector $R_{B,t}$, which is a reception signal after multipath division, is expressed as shown in the following Equation (23).

$$\mathbf{R}_{B,t} = \tilde{\mathbf{R}} + \hat{\mathbf{R}}_{B,t} \quad \cdots \quad (23)$$

In Equation (23), the vector $R_{B,t}$ is an $N_B$-dimensional vector having reception signal replicas generated using propagation channel estimation values after multipath division as elements. The vector $R^-$ is an $N_B$-dimensional vector obtained by copying reception antenna components of signals from which reception replicas are removed in the reception antennas 1001-1 to 1001-R by the number of divisions.

A signal $R_{res}$ obtained by removing a reception signal replica from a reception signal is expressed by Equation (24).

$$\mathbf{R}_{res} = \mathbf{R} - \hat{\mathbf{H}}\mathbf{F}\hat{\mathbf{S}} \quad \cdots \quad (24)$$

In this regard, $H^\wedge$ is a propagation channel estimation value of the vector H. A vector $S^\wedge$ is a $TN_F$-dimensional vector having signals obtained by performing time to frequency conversion and subcarrier allocation on symbol replicas as elements.

For example, a vector $R^-$ is generated by making $N_1$ copies of a 1st element of a vector $R_{res}$, by making $N_2$ copies of a 2nd element of $R_{res}$, $\cdots$ , and by making $N_R$ copies of an Rth element of $R_{res}$. $R_{B,t}(k)$ is an $N_B N_F$-dimensional vector having elements of reception replicas generated by divided multipaths.

A signal output by the signal detecting unit 1006 is obtained by an MMSE weight vector W in which $\| W^H R_{B\text{-}S}\|^2$ is minimized as shown in Equations (25), (26), and (27).

$$\mathbf{Z}_t = \frac{1}{1 + \gamma_t p_t}(\gamma_t \hat{\mathbf{s}}_t + \mathbf{F}^H (\mathbf{H}_B)_t^H \mathbf{\Sigma}^{-1} \tilde{\mathbf{R}}) \quad \cdots \quad (25)$$

$$p_t = \frac{1}{K}\hat{s}_t\hat{s}_t^H \quad \cdots \quad (26)$$

$$\gamma_t = (\mathbf{H}_B)_t^H \Sigma^{-1}(\mathbf{H}_B)_t \quad \cdots \quad (27)$$

A vector $F^H$ represents IFFT. A vector $H_B$ is a propagation channel matrix considering subcarrier allocation after multipath division. Assuming that a propagation channel matrix without considering subcarrier allocation as in the second embodiment is $H_B$', the vector $H_B$ considering subcarrier mapping becomes $M^T H_B'M$. The subscript t of Equations (25), (26), and (27) represents a $t^{th}$ transmission antenna component.

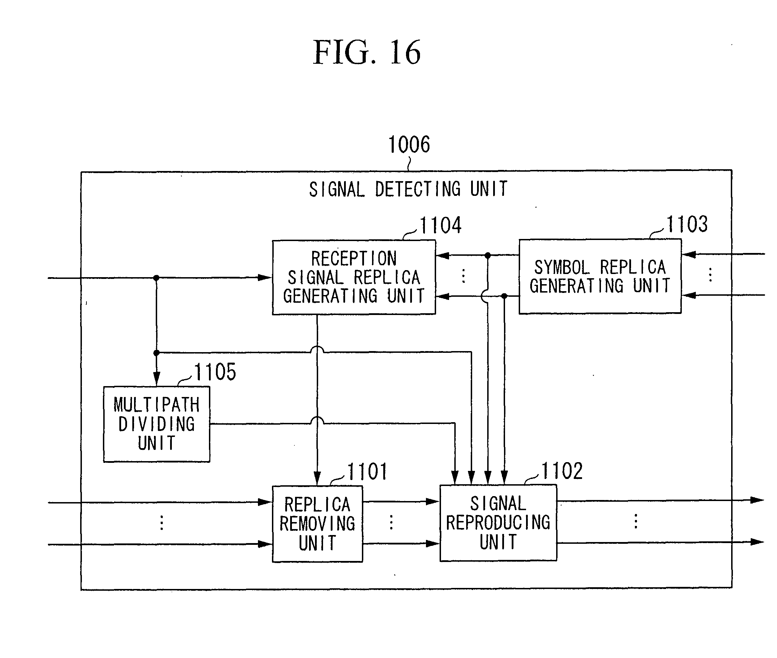

FIG. 16 is a schematic block diagram showing a configuration of the signal detecting unit 1006 (FIG. 15) of the radio reception device 1000 according to the fourth embodiment of the present invention. The signal detecting unit 1006 includes a replica removing unit 1101, a signal reproducing unit 1102, a symbol replica generating unit 1103, a reception signal replica generating unit 1104, and a multipath dividing unit 1105. The signal detecting unit 1006 performs processing based on Equation (25).

The replica removing unit 1101 removes reception signal replicas generated by the reception signal replica generating unit 1104 from reception signals output by the FFT units 1005-1 to 1005-R using Equation (24), and outputs the signals to the signal reproducing unit 1102.

The multipath dividing unit 1105 generates propagation channel estimation values after multipath division from propagation channel estimation values output by the propagation channel estimating unit 1009 (FIG. 15), and outputs the propagation channel estimation values to the signal reproducing unit 1102.

The symbol replica generating unit 1103 generates symbol replicas from bit LLRs output by the decoding units 1008-1 to 1008-T (FIG. 15), and outputs the symbol replicas to the signal reproducing unit 1102 and the reception signal replica generating unit 1104.

The signal reproducing unit 1102 separates MIMO signals based on the signals output by the replica removing unit 1101, the propagation channel estimation values output by the propagation channel estimating unit 1009 (FIG. 15), the propagation channel estimation values on which the multipath dividing unit 1105 performs multipath division, and the symbol replicas output by the symbol replica generating unit 1103, transforms the MIMO signals into time domain signals, and outputs the time domain signals.

The signal reproducing unit 1102 generates the signals after the MIMO signal separation shown in Equation (25).

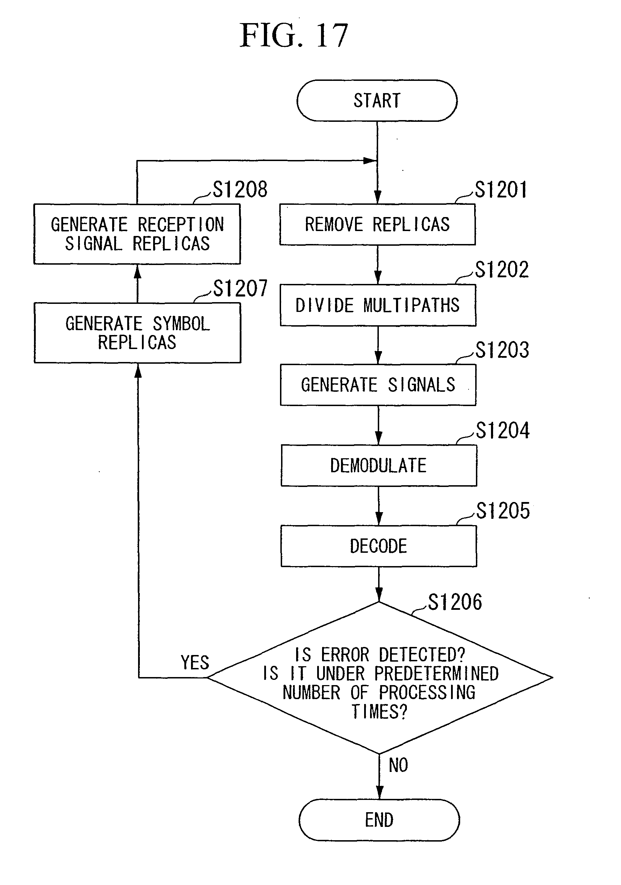

FIG. 17 is a flowchart showing a reception process of the radio reception device 1000 (FIG. 15) according to the fourth embodiment of the present invention.

First, the replica removing unit 1101 (FIG. 16) of the signal detecting unit 1006 removes reception signal replicas generated by the reception signal replica generations unit 1104 in step S 1208 from reception signals (step S1201).

The multipath dividing unit 1105 (FIG. 16) of the signal detecting unit 1006 performs multipath division (step S1202). Thereby, the multipath dividing unit 1105 obtains propagation channel estimation values after the multipath division from propagation channel estimation values output by the propagation channel estimating unit 1009 (FIG. 15).

The signal reproducing unit 1102 (FIG. 16) of the signal detecting unit 1006 separates MIMO signals from signals from which the replicas are removed in step S1201, and generates the signals transformed into a time domain (step S1203).

The demodulation units 1007-1 to 1007-T (FIG. 15) demodulate the signals obtained in step S2103 (step S1204), and calculate bit LLRs.

The decoding units 1008-1 to 1008-T perform error correction decoding on the bit LLRs after the demodulation process in step S1204 (step S1205).

The decoding units 1008-1 to 1008-T (FIG. 15) determine whether or not an error is detected from the results of the error correction decoding process in step S1205 (step S1206). The decoding units 1008-1 to 1008-T determine whether or not the error correction decoding process of step S1205 does not reach the predetermined number of processing times (step S1206). If no error is detected, or if the predetermined number of processing times is reached, in step S1206 ("NO" in step S1206), the decoding units 1008-1 to 1008-T output information bits, and the processing of the flowchart of FIG. 17 is terminated.

On the other hand, if the error is detected, or if the predetermined number of processing times is not reached, in step S1206 ("YES" in step S1206), the decoding units 1008-1 to 1008-T output the coded bit LLRs to the symbol replica generating unit 1103 of the signal detecting unit 1006.

The symbol replica generating unit 1103 (FIG. 16) of the signal detecting unit 1006 generates symbol replicas from the coded bit LLRs (step S1207).

The reception signal replica generating unit 1104 generates the reception signal replicas (step S1208). The processing moves to step S1201.

The case where the SC-FDMA is used as the single carrier transmission scheme has been described in the fourth embodiment, but the present invention is not limited thereto. The present invention is applicable to other schemes in which MIMO signal separation is performed in a frequency domain.

The case where an MMSE is mainly used as a MIMO separation scheme has been described in the above-described first to fourth embodiments, but the present invention is not limited thereto. For example, the SIC or MLD may be used to improve initial MIMO separation performance.

The MIMO separation scheme of the initial time may be different from the MIMO separation scheme after the multipath division. For example, MLD may be performed at the initial time, and MMSE detection may be performed after the division. Also, the processing of the SIC may be performed at the initial time, and the processing of the MLD may be performed after the division.

In each embodiment described above, the radio reception device may communicate with the radio transmission device using single carrier transmission, or may communicate with the radio transmission device 100 using multicarrier transmission.

A computer-readable recording medium may record a program for implementing functions of parts of the radio transmission device (FIG. 1 or FIG. 14) or parts of the radio reception device (FIG. 2 or FIG. 15) in the first to fourth embodiments described above. A computer system may read and execute the program recorded on the recording medium to control the radio transmission device or the radio reception device. Here, the "computer system" includes an OS and hardware such as peripheral devices.

The "computer readable recording medium" is a portable medium such as a flexible disc, magneto-optical disc, ROM and CD-ROM, and a storage device, such as a hard disk, built in the computer system. Furthermore, the "computer readable recording medium" may also include a medium that dynamically holds a program for a short period of time, such as a communication line when a program is transmitted via a network such as the Internet or a communication network such as a telephone network, and a medium that holds a program for a fixed period of time, such as a volatile memory in a computer system serving as a server or client in the above situation. The program may be one for implementing a part of the above functions, or the above functions may be implemented in combination with a program already recorded on the computer system.

The embodiments of the present invention have been described in detail with reference to the drawings. However, specific configurations are not limited to the embodiments and any design and the like in the scope without departing from the subject matter of the present invention are included in the claims.

Industrial applicability

The present invention is applicable to a communication system, a reception device, a communication method, and the like that can obtain good transmission characteristics between a transmission device and a reception device without increasing the number of reception antennas of the reception device.

Reference Symbols

100: Radio transmission device
101-1 to 101-T: Encoding unit
102-1 to 102-T: Modulation unit
103-1 to 103-T: IFFT unit
104-1 to 104-T: Pilot multiplexing unit
105-1 to 105-T: GI insertion unit
106-1 to 106-T: D/A conversion unit
107-1 to 107-T: Transmission filter unit
108-1 to 108-T: Radio unit
109-1 to 109-T: Transmission antenna
110: Pilot signal generating unit

200: Radio reception device
201-1 to 201-R: Reception antenna unit
202-1 to 202-R: Radio unit
203-1 to 203-R: Reception filter unit
204-1 to 204-R: A/D conversion unit
205-1 to 205-R: FFT unit
206a, 206b: Signal detecting unit
207-1 to 207-T: Demodulation unit
208-1 to 208-T: Decoding unit
209: Propagation channel estimating unit
301: Reception signal dividing unit
302: Signal separating unit
303: Symbol replica generating unit
304: Division replica generating unit
305: Multipath dividing unit
401: Replica removing unit
402: Signal reproducing unit
403: Symbol replica generating unit
404: Reception signal replica generating unit
405: Multipath dividing unit
900: Radio transmission device
901-1 to 901-T: Encoding unit
902-1 to 902-T: Modulation unit
903-1 to 903-T: DFT unit
904-1 to 904-T: Subcarrier allocation unit
905-1 to 905-T: Pilot multiplexing unit
906-1 to 906-T: IFFT unit
907-1 to 907-T: GI insertion unit
908-1 to 908-T: D/A conversion unit
909-1 to 909-T: Transmission filter unit
910-1 to 910-T: Radio unit
911-1 to 911-T: Transmission antenna unit
912: Pilot signal generating unit
1000: Radio reception device
1001-1 to 1001-R: Reception antenna
1002-1 to 1002-R: Radio unit
1003-1 to 1003-R: Reception filter unit
1004-1 to 1004-R: A/D conversion unit
1005-1 to 1005-R: FFT unit
1006: Signal detecting unit
1007-1 to 1007-T: Demodulation unit
1008-1 to 1008-T: Decoding unit
1009: Propagation channel estimating unit
1101: Replica removing unit
1102: Signal reproducing unit
1103: Symbol replica generating unit
1104: Reception signal replica generating unit
1105: Multipath dividing unit

**Claims**

1. A communication system comprising a transmission device and a reception device,
   wherein the transmission device comprises:

   multiple transmission antennas; and
   a transmitting unit which transmits transmission signals from the multiple transmission antennas to the reception
   device, and

the reception device comprises:

at least one reception antenna which receives multiple transmission signals from the multiple transmission antennas;

a Fourier transform unit which transforms the signals received by the reception antenna from a time domain into a frequency domain;

a propagation channel estimating unit which calculates propagation channel estimation values by estimating propagation channels between the multiple transmission antennas and the reception antenna; and

a signal detecting unit which detects the multiple transmission signals by dividing multipaths from the signals that are transformed into the frequency domain by the Fourier transform unit.

2. A reception device, which communicates with a transmission device having multiple transmission antennas, comprising:

at least one reception antenna which receives multiple transmission signals that are transmitted from the multiple transmission antennas by the transmission device;

a Fourier transform unit which transforms the signals received by the reception antenna from a time domain into a frequency domain;

a propagation channel estimating unit which calculates propagation channel estimation values by estimating propagation channels between the multiple transmission antennas and the reception antenna; and

a signal detecting unit which detects the multiple transmission signals by dividing multipaths from the signals that are transformed into the frequency domain by the Fourier transform unit.

3. The reception device according to claim 2, wherein the signal detecting unit generates multipath division signals divided based on the multipaths from the signals that are transformed into the frequency domain by the Fourier transform unit, and detects the multiple transmission signals using the multipath division signals.

4. The reception device according to claim 3, comprising:

a demodulation unit which generates coded bit LLRs, which are reliability information of bits, by demodulating the signals detected by the signal detecting unit; and

a decoding unit which performs an error correction decoding process on the coded bit LLRs generated by the demodulation unit,

wherein the signal detecting unit generates the multipath division signals using the coded bit LLRs output by the decoding unit.

5. The reception device according to claim 4, wherein the signal detecting unit comprises:

a symbol replica generating unit which generates symbol replicas, which are replicas of modulation symbols from the coded bit LLRs;

a multipath dividing unit which divides the propagation channel estimation values based on the multipaths;

a division replica generating unit which generates division replicas to generate the multipath division signals from the symbol replicas and the propagation channel estimation values divided by the multipath dividing unit;

a reception signal dividing unit which generates the multipath division signals by subtracting the division replicas from the signals that are transformed into the frequency domain by the Fourier transform unit; and

a signal separating unit which detects the multiple transmission signals from the multipath division signals.

6. The reception device according to claim 5, wherein the signal separating unit generates linear weights using the propagation channel estimation values, the propagation channel estimation values divided by the multipath dividing unit, and the symbol replicas, and detects the multiple transmission signals using the linear weights.

7. The reception device according to claim 2, comprising:

a demodulation unit which generates coded bit LLRs, which are reliability information of bits, by demodulating the signals detected by the signal detecting unit; and

a decoding unit which performs an error correction decoding process on the coded bit LLRs generated by the demodulation unit,

wherein the signal detecting unit comprises:

a symbol replica generating unit which generates symbol replicas, which are replicas of modulation symbols, from the coded bit LLRs on which the decoding unit performs the error correction decoding process;

a reception signal replica generating unit which generates reception signal replicas from the symbol replicas and the propagation channel estimation values;

a replica removing unit which removes the reception signal replicas from the signals that are transformed into the frequency domain by the Fourier transform unit;

a multipath dividing unit which divides the propagation channel estimation values based on the multipaths; and

a signal reproducing unit which detects the multiple transmission signals using the signals from which the reception signal replicas are removed by the replica removing unit, the propagation channel estimation values, the propagation channel estimation values divided by the multipath dividing unit, and the symbol replicas.

8. The reception device according to claim 7, wherein the signal reproducing unit detects the multiple transmission signals for each desired transmission signal.

9. The reception device according to claim 2, wherein communication with the transmission device is performed using single carrier transmission.

10. The reception device according to claim 2, wherein communication with the transmission device is performed using multicarrier transmission.

11. A communication method using a transmission device having multiple transmission antennas and a reception device having at least one reception antenna, comprising:

transmitting, by the transmission device, transmission signals from the multiple transmission antennas to the reception device, and

transforming, by the reception device, the transmission signals received by the reception antenna from a time domain into a frequency domain;

calculating, by the reception device, propagation channel estimation values by estimating propagation channels between the multiple transmission antennas and the reception antenna; and

detecting, by the reception device, the multiple transmission signals by dividing multipaths from the signals that are transformed into the frequency domain in the Fourier transforming.

FIG. 1

EP 2 320 587 A1

# FIG. 2

RADIO RECEPTION DEVICE — 200

Blocks: 201-1 antenna → 202-1 RADIO UNIT → 203-1 RECEPTION FILTER UNIT → 204-1 A/D CONVERSION UNIT → 205-1 FFT UNIT → 206a SIGNAL DETECTING UNIT → 207-1 DEMODULATION UNIT → 208-1 DECODING UNIT → INFORMATION BITS

201-R antenna → 202-R RADIO UNIT → 203-R RECEPTION FILTER UNIT → 204-R A/D CONVERSION UNIT → 205-R FFT UNIT → 206a SIGNAL DETECTING UNIT → 207-T DEMODULATION UNIT → 208-T DECODING UNIT → INFORMATION BITS

209 PROPAGATION CHANNEL ESTIMATING UNIT

BIT LLRS

EP 2 320 587 A1

# FIG. 3

206a

## SIGNAL DETECTING UNIT

304

DIVISION REPLICA
GENERATING UNIT

303

SYMBOL REPLICA
GENERATING UNIT

305

MULTIPATH
DIVIDING
UNIT

301

RECEPTION
SIGNAL
DIVIDING
UNIT

302

SIGNAL
SEPARATING
UNIT

EP 2 320 587 A1

FIG. 4

(a)

POWER

p1  p2  p3  p4  p5  p6

TIME

(b)

b1

POWER  p1  p2  p3  p4  p5  p6

TIME

(c)

b2

POWER  p1  p2  p3  p4  p5  p6

TIME

(d)

b3

POWER  p1  p2  p3  p4  p5  p6

TIME

# FIG. 5

START

S508
GENERATE DIVISION REPLICAS

S501
DIVIDE RECEPTION SIGNALS

S507
DIVIDE MULTIPATHS

S502
PERFORM MIMO SEPARATION

S506
GENERATE SYMBOL REPLICAS

S503
DEMODULATE

S504
DECODE

S505
IS ERROR DETECTED? IS IT UNDER PREDETERMINED NUMBER OF PROCESSING TIMES?

YES

NO

END

## FIG. 6

```
        ( START )
            │
            ▼          S2001
   ┌─────────────────┐
   │ REMOVE DIVISION │
   │    REPLICAS     │
   └─────────────────┘
            │
            ▼
         ( END )
```

## FIG. 7

```
        ( START )
            │
            ▼          S2101
   ┌─────────────────┐
   │    GENERATE     │
   │    WEIGHTS      │
   └─────────────────┘
            │
            ▼          S2102
   ┌─────────────────┐
   │    MULTIPLY     │
   │    WEIGHTS      │
   └─────────────────┘
            │
            ▼
         ( END )
```

## FIG. 8

```
        ( START )
            │
            ▼          S2201
   ┌─────────────────┐
   │    GENERATE     │
   │    REPLICAS     │
   └─────────────────┘
            │
            ▼
         ( END )
```

# FIG. 9

206b

SIGNAL DETECTING UNIT

RECEPTION SIGNAL REPLICA GENERATING UNIT — 404

SYMBOL REPLICA GENERATING UNIT — 403

MULTIPATH DIVIDING UNIT — 405

REPLICA REMOVING UNIT — 401

SIGNAL REPRODUCING UNIT — 402

EP 2 320 587 A1

# FIG. 10

```
                                    START

           S708                                    S701
  GENERATE RECEPTION              REMOVE REPLICAS
    SIGNAL REPLICAS

           S707                                    S702
  GENERATE SYMBOL                 DIVIDE MULTIPATHS
     REPLICAS

                                                   S703
                                 GENERATE SIGNALS

                                                   S704
                                    DEMODULATE

                                                   S705
                                      DECODE

                                                   S706
                          IS ERROR DETECTED?
                YES      IS IT UNDER PREDETERMINED
                          NUMBER OF PROCESSING
                                 TIMES?

                                      NO

                                     END
```

# FIG. 11

```
        ┌──────────┐
        │  START   │
        └──────────┘
              │
              ▼          S2301
    ┌──────────────────────┐
    │  REMOVE RECEPTION     │
    │  SIGNAL REPLICAS      │
    └──────────────────────┘
              │
              ▼
        ┌──────────┐
        │   END    │
        └──────────┘
```

# FIG. 12

```
        ┌──────────┐
        │  START   │
        └──────────┘
              │
              ▼          S2401
    ┌──────────────────────┐
    │  GENERATE WEIGHTS     │
    └──────────────────────┘
              │
              ▼          S2402
    ┌──────────────────────┐
    │  MULTIPLY WEIGHTS     │
    └──────────────────────┘
              │
              ▼          S2403
    ┌──────────────────────┐
    │  GENERATE SIGNALS     │
    └──────────────────────┘
              │
              ▼
        ┌──────────┐
        │   END    │
        └──────────┘
```

# FIG. 13

```
                              ┌──────────┐
                              │  START   │
                              └──────────┘
                                    │
        ┌─────────────────────┐     │     ┌─────────────────────┐
  S808  │ GENERATE RECEPTION  │     │ S801│   REMOVE REPLICAS    │
        │  SIGNAL REPLICAS    │     │     │                      │
        └─────────────────────┘     │     └─────────────────────┘
                  ↑                 │                │
        ┌─────────────────────┐     │     ┌─────────────────────┐
  S807  │  GENERATE SYMBOL    │     │ S802│   DIVIDE MULTIPATHS   │
        │     REPLICAS        │     │     │                      │
        └─────────────────────┘     │     └─────────────────────┘
                  ↑                 │                │
                                    │     ┌─────────────────────┐
                                    │ S803│   GENERATE SIGNALS   │
                                    │     └─────────────────────┘
                                    │                │
                                    │     ┌─────────────────────┐
                                    │ S804│     DEMODULATE       │
                                    │     └─────────────────────┘
                                    │                │
                                    │     ┌─────────────────────┐
                                    │ S805│      DECODE          │
                                    │     └─────────────────────┘
                                    │                │
                                    │            S806
                                    │        ╱─────────────╲
                                    │       ╱ IS ERROR      ╲
                           YES      │      ╱  DETECTED?       ╲
                        ───────────────── IS IT UNDER         ──
                                          PREDETERMINED
                                          NUMBER OF PROCESSING
                                           ╲    TIMES?    ╱
                                            ╲───────────╱
                                                 │ NO
                                            ┌──────────┐
                                            │   END    │
                                            └──────────┘
```

FIG. 14

# FIG. 15

# FIG. 16

SIGNAL DETECTING UNIT  1006

RECEPTION SIGNAL REPLICA GENERATING UNIT  1104

SYMBOL REPLICA GENERATING UNIT  1103

MULTIPATH DIVIDING UNIT  1105

REPLICA REMOVING UNIT  1101

SIGNAL REPRODUCING UNIT  1102

EP 2 320 587 A1

# FIG. 17

START

↓

S1201
REMOVE REPLICAS

↓

S1202
DIVIDE MULTIPATHS

↓

S1203
GENERATE SIGNALS

↓

S1204
DEMODULATE

↓

S1205
DECODE

↓

S1206
IS ERROR DETECTED?
IS IT UNDER PREDETERMINED
NUMBER OF PROCESSING
TIMES?

YES → 

S1208
GENERATE RECEPTION
SIGNAL REPLICAS

↑

S1207
GENERATE SYMBOL
REPLICAS

NO

↓

END

# FIG. 18

<div align="center">

**INTERNATIONAL SEARCH REPORT**

</div>

| | International application No. |
|---|---|
| | PCT/JP2009/063294 |

A. CLASSIFICATION OF SUBJECT MATTER
H04J99/00(2009.01)i, H04B7/04(2006.01)i, H04J11/00(2006.01)i, H04W16/28
(2009.01)i

According to International Patent Classification (IPC) or to both national classification and IPC

B. FIELDS SEARCHED

Minimum documentation searched (classification system followed by classification symbols)
H04J99/00, H04B7/04, H04J11/00, H04W16/28

Documentation searched other than minimum documentation to the extent that such documents are included in the fields searched
Jitsuyo Shinan Koho          1922–1996   Jitsuyo Shinan Toroku Koho   1996–2009
Kokai Jitsuyo Shinan Koho    1971–2009   Toroku Jitsuyo Shinan Koho   1994–2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-354222 A (Toshiba Corp.), 22 December 2005 (22.12.2005), entire text; all drawings (Family: none) | 1-11 |
| A | JP 2006-54759 A (Tohoku University), 23 February 2006 (23.02.2006), entire text; all drawings (Family: none) | 1-11 |
| A | JP 2006-339773 A (NEC Corp.), 14 December 2006 (14.12.2006), entire text; all drawings & US 2006/0268963 A1 | 1-11 |

[X] Further documents are listed in the continuation of Box C.    [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 October, 2009 (15.10.09) | 27 October, 2009 (27.10.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
|---|
| PCT/JP2009/063294 |

C (Continuation).  DOCUMENTS CONSIDERED TO BE RELEVANT

| Category* | Citation of document, with indication, where appropriate, of the relevant passages | Relevant to claim No. |
|---|---|---|
| A | WO 2005/86402 A1  (NTT Docomo Inc.), 15 September 2005 (15.09.2005), entire text; all drawings & US 2007/0197166 A1    & EP 1722499 A1 & CN 1930813 A | 1-11 |
| A | Kimihiko IMAMURA et al., "Chienha no Totatsu Jikan ni Motozuita Block Bunkatsu o Okonau SC/MMSE MC-CDM Turbo Toka no Teian", IEICE Technical Report, RCS 106(168), The Institute of Electronics, Information and Communication Engineers, 2006.07, pages 79 to 84, RCS2006-72 | 1-11 |
| P,A | WO 2008/146713 A1  (Sharp Corp.), 12 April 2008 (12.04.2008), entire text; all drawings (Family: none) | 1-11 |

Form PCT/ISA/210 (continuation of second sheet) (April 2007)

**EP 2 320 587 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2008193407 A


**Non-patent literature cited in the description**

• **Arogyaswami J. Paulraj ; Dhananjay A. Gore ; Rohit U. Nabar ; Helmut Bolcskei.** An overview of MIMO communications-A key to Gigabit wireless. *Proceedings of the IEEE,* February 2004, vol. 92 (2), 198-218